# EUROPEAN PATENT APPLICATION

(11) **EP 3 761 409 A1**
(43) Date of publication of application: **06.01.2021**
(21) Application number: 19761451.4
(22) Date of filing: 28.02.2019
(51) Int. Cl.: H01M 4/36, H01M 4/48, H01M 4/38, H01M 4/62, H01M 4/13, H01M 10/052, C01B 33/113

(54) **ELECTRODE ACTIVE MATERIAL HAVING CELLULOSE-BASED OR WEAKLY ACIDIC COMPOUND-BASED CONDUCTIVE POLYMER, AND LITHIUM-ION BATTERY INCLUDING SAME**

(30) Priority: 02.03.2018 KR 20180025045; 22.10.2018 KR 20180125831; 31.12.2018 KR 20180173583
(71) Applicant: CNP Solutions Co., Ltd., Seoul 02841 (KR); Kim, Jong Eun, Seoul 07949 (KR); Suh, Bo Won, Yongin-si, Gyeonggi-do 16824 (KR)
(72) Inventor: KIM, Sung Do, Seoul 02857 (KR); KIM, Jong Do, Seoul 03113 (KR); LEE, Bo Ram, Yongin-si, Gyeonggi-do 17113 (KR); JUNG, Gyu Jin, Seoul 02578 (KR); KIM, Jong Eun, Seoul 07949 (KR); SUH, Bo Won, Yongin-si Gyeonggi-do 16824 (KR)
(74) Representative: Beck & Rössig European Patent Attorneys
(86) International application number: PCT/KR2019/002430
(87) International publication number: WO 2019/168376

(57) **Abstract**

The present invention relates to an electrode active-material composition including, as a binder material for an electrode active material, a conductive polymer synthesized using a cellulose-based compound and/or a weakly acidic compound alone or in combination as a template, and a lithium-ion battery manufactured using the same, and particularly to PEDOT:CMC synthesized as a preferred active-material composition, and a lithium-ion battery manufactured using the same as a binder. The technique of the present invention is capable of improving the cycle characteristics, that is, the lifetime, of the lithium-ion battery including an anode active material made of a graphite component and/or a silicon component alone or in combination, along with various cathode active materials including a nickel-cobalt-manganese (NCM)-based active material, a nickel-cobalt-aluminum (NCA)-based active material, a lithium-cobalt oxide (LCO) active material, and other lithium.

## Description

### Technical Field

The present invention relates to an active-material composition for a lithium-ion battery and a lithium-ion battery using the same, and more particularly to an active-material slurry composition including a conductive polymer prepared using a cellulose-based compound or a weakly acidic compound as a template, and a lithium-ion battery using the same.

### Background Art

A lithium-ion battery is manufactured by mixing a cathode active material including lithium-containing compound particles and an anode active material including graphite as a representative example with a binder to form a cathode active-material layer and an anode active-material layer on the surface of an electrode plate material such as aluminum or copper, impregnating the cathode active-material layer and the anode active-material layer with an electrolyte, and laminating the cathode active-material layer and the anode active-material layer with a separator interposed therebetween.

Unlike an electric double-layer energy storage device, namely a capacitor, which operates in a manner of repeating adsorption and desorption on the surface thereof, a lithium-ion battery operates such that lithium ions perform charging and discharging while moving between the cathode active-material layer and the anode active-material layer and the lithium ions are repetitively intercalated into and then deintercalated from the cathode active-material layer and the anode active-material layer. During this process, the initial discharge capacity decreases with an increase in the number of charge/discharge cycles, and thus performance decreases and so-called cycle characteristics deteriorate.

It is known that the extent of deterioration of cycle characteristics, particularly the extent of reduction in initial capacity due to repeated charge/discharge, varies depending on the type of active material. Lithium-cobalt oxide (LCO) as a cathode active material and graphite as an anode active material are known to have comparatively good cycle characteristics due to the relatively slow reduction in initial discharge capacity thereof. However, active materials, including nickel- or aluminum-introduced active materials such as nickel-cobalt-manganese (NCM) or nickel-cobalt-aluminum (NCA), or anode active materials such as silicon metal particles or silicon oxide, known to have very high capacity, are rapidly decreased in initial capacity depending on the number of cycles, and thus the cycle characteristics thereof are rapidly deteriorated.

When manufacturing a lithium-ion battery, a binder material is used to enhance adhesion between these active-material particles, particularly adhesion to an electrode plate. As for typically useful binders, an aqueous solvent is difficult to use for the cathode active material, and thus an organic binder such as polyvinylidene fluoride (PVDF) is used, and also, for the anode active material, compounds such as carboxylated methylcellulose (CMC), styrene-butadiene rubber (SBR), polyacrylic acid (PAA) and the like may be used alone or in combination thereof.

These binder materials and major components such as active materials and carbon black used for enhancing electrical conductivity are mixed with a solvent such as N-methyl-2-pyrrolidone (NMP), water, etc. to afford an active-material composition, which is then applied on the electrode plate to form a coating film having a predetermined thickness, serving as an electrode material, thereby manufacturing a lithium-ion battery.

When using graphite as the anode active material, graphite itself has high electrical conductivity, and thus carbon black is not additionally used or is used only in a small amount.

The amount of the binder is very low in the preparation of an active-material composition for a lithium-ion battery. For example, the anode active material using graphite is composed of 95% or more of graphite and the remainder of a binder and carbon black. Since the amount of the binder material is very low, uniform dispersion of the active material and carbon black, adhesion to the electrode plate, and density in the electrode layer are regarded as very important.

Carbon black is known as a material having a large number of hydroxyl groups (-OH) on the surface thereof, and it is known that carbon black agglomerates because of these hydroxyl groups, making it difficult to uniformly disperse carbon black in an organic solvent and a binder. During charging and discharging, particularly heating and cooling, adhesion of carbon black to the binder material may decrease, or the electrical conductivity thereof may decrease. Actually, when a lithium-ion battery that has been tested for 100 charge/discharge cycles is disassembled, the active-material layer is often observed to be separated from the electrode plate, and also, when composite impedance attributable to the electrode plate is measured, the resistance value is known to increase significantly. As described above, the increase in the inter-plate resistance during the charging/discharging process means that carbon black does not function as an electrically conductive pathway, which results in deterioration of the performance of the lithium-ion battery.

In order to make up for the shortcomings of carbon black and to impart stable electrical conductivity to the electrode layer itself made of an active-material composition, Korean Patent Application Publication No. 10-2016-0100133 discloses a cathode active-material composition including a conductive aqueous binder so as to manufacture a lithium battery having improved cycle life characteristics by supplementing the electrical conductivity of a conventional PVDF-based binder. In particular, the cathode active-material composition of Korean Patent Application Publication No. 10-2016-0100133 is advantageous because the conductivity of the conductive material is maintained due to the use of the conductive material PEDOT:PSSA as the binder, and is thus improved compared to the conventional PVDF-based binder. However, it is still necessary to improve performance for increasing the capacity of the battery as well as the cycle life characteristics of the continuous charge/discharge cycle test.

Since the agglomeration of carbon black itself cannot be fundamentally prevented using the conductive polymer binder, it is not possible to solve the problem in which the cycle characteristics eventually deteriorate significantly with an increase in the number of cycles. Moreover, in order to ensure high capacity, the existing lithium-ion battery including the active material, the binder and the conductive material is composed of 90% or more of the active material, with the remainder being the organic binder and carbon black as the conductivity enhancer, meaning that the amount of the organic binder is very low. This is because the active material has to be contained in a larger amount in the active-material composition in order to increase the capacity.

However, in the case of an active material having a very high capacity, for example, in the case of silicon metal particles having a theoretical capacity of 4,000 mAh/g or more, the capacity of silicon itself is very high, so sufficient capacity may be obtained without the need to increase the thickness of the anode layer. In this case, the thickness of the electrode layer may be reduced instead. As such, when the amount of the active material contained in the anode active-material composition is increased, the viscosity of the slurry is increased and the solid content is excessively high, which makes it difficult to form a thin electrode layer.

In the case of active materials undergoing severe expansion/contraction during charging and discharging, such as a silicon-based active material and the like, it is common to use these active materials in combination with graphite rather than alone. However, when an active material such as silicon metal particles or SiOx is mixed therewith, there is a problem in that expansion/contraction occur equally due to charge/discharge.

### Disclosure

### Technical Problem

The present invention has been made keeping in mind the problems encountered in the related art, and the present invention is intended to provide a conjugated conductive polymer binder, which may exhibit excellent properties as a binder for a lithium-ion battery, and is synthesized using, as a template, the same type of compound as an existing binder material, because the properties of the conductive polymer may vary depending on the type of template compound. Moreover, the present invention is intended to provide a novel conjugated conductive polymer binder, which has high compatibility with active materials and may improve the cycle life characteristics of a lithium-ion battery.

In addition, the present invention is intended to provide a technique for improving the charge/discharge cycle life characteristics of a lithium-ion battery using the novel binder material for a cathode or anode active material for a lithium-ion battery, and a lithium-ion battery having good cycle life characteristics and exhibiting large capacity and a long lifetime using the same.

In addition, the present invention is intended to provide a novel anode active-material composition, which is capable of improving charge/discharge cycle characteristics by strongly adhering the electrode active-material layer to the electrode plate and increasing the density of the material for the electrode layer while decreasing the thickness of the electrode layer upon manufacturing a lithium-ion battery using an anode active material having a high capacity, and a lithium-ion battery including the same.

### Technical Solution

Therefore, in the present invention, a novel conjugated conductive polymer compound is synthesized and is used as a binder material when mixed with an active material as an electrode material for a lithium-ion battery.

In the novel binder of the present invention, a cellulose-based compound or a weakly acidic compound, which is conventionally mainly used as a binder for an anode active material for a lithium-ion battery, is used to afford a conductive polymer, which is then utilized as a binder for an active material.

The conductive polymer binder of the present invention is a conductive polymer binder synthesized using a cellulose-based compound as a template in a conductive polymer synthesized from a monomer for conductive polymer synthesis, such as aniline, pyrrole, thiophene or 3,4-ethylenedioxythiophene, or a modified monomer thereof for a modified conductive polymer. This novel binder is designed such that the binder material itself is electrically conductive upon mixing with an active material, enhances miscibility with and adhesion to the cathode or anode active material, and increases adhesion of the electrode material layer to an electrode plate material, particularly has good flow characteristics of the active-material slurry, and is thus suitable for forming films on electrode plates of typical lithium-ion batteries, and moreover, the acidity of the synthesized conductive polymer binder is low, thus reducing corrosion of constituents or loss of lithium ions, ultimately improving the charge/discharge cycle characteristics of lithium-ion batteries.

In the lithium-ion battery of the present invention, an active-material composition of either or both of an anode and a cathode for the lithium-ion battery includes at least one selected from among a cellulose-based conductive polymer binder synthesized using a cellulose-based compound as a template, a mixed conductive polymer binder obtained by mixing the cellulose-based conductive polymer binder with at least one conductive polymer synthesized using a different type of compound as a template, and a cellulose-based conductive polymer binder synthesized using, as a template, a polymer compound having an exponential hydrogen ion concentration (pH) of 2-6 in an aqueous solution state.

Also, in the lithium-ion battery of the present invention, the cellulose-based compound is configured such that a portion of the -R component of the -OR group of a cellulose molecule is substituted with a component that enables dissolution in water, in which the degree of substitution is 0.5 or more; and the cellulose-based compound is configured such that the -R component of the -OR group of a cellulose molecule is alkylcarboxylic acid or a salt compound thereof or a hydroxyl group.

Also, in the lithium-ion battery of the present invention, the length of the alkyl group of the alkylcarboxylic acid or the salt compound thereof is 1-4 carbon atoms; and the cellulose-based compound is carboxymethyl cellulose (CMC) having a degree of substitution of 0.5 or more.

Also, in the lithium-ion battery of the present invention, the cellulose-based compound has a weight average molecular weight of 50,000-4,000,000 g/mol, and a conductive polymer synthesized using the cellulose-based compound as a template includes at least one selected from among aniline, pyrrole, thiophene and modified conductive polymers thereof.

Also, in the lithium-ion battery of the present invention, the cellulose-based conductive polymer is poly(3,4-ethylenedioxythiophene):carboxymethyl cellulose (PEDOT:CMC), and the PEDOT:CMC solid content in the PEDOT:CMC aqueous suspension is 1-10%.

Also, in the lithium-ion battery of the present invention, the template of the cellulose-based conductive polymer binder is a mixed template obtained by mixing the cellulose-based compound with an acrylic compound.

Also, in the lithium-ion battery of the present invention, the cellulose-based compound is carboxymethyl cellulose, the different type of compound is an acrylic polymer, particularly polyacrylic acid, the solid content of the conductive polymer synthesized using the mixed template in the binder aqueous suspension is 1-10%, and the weight ratio of carboxymethyl cellulose and polyacrylic acid is (95:5)-(5:95).

Also, in the lithium-ion battery of the present invention, the different type of compound is a polymer compound having an exponential hydrogen ion concentration (pH) of 2-6 in an aqueous solution state or poly(styrene sulfonic acid) (PSSA), and the solid content of the total conductive polymer binder in the binder aqueous suspension is 1-10%.

Also, in the lithium-ion battery of the present invention, the different type of compound includes at least one selected from among polyacrylic acid (PAA) and poly(styrene sulfonic acid) (PSSA), and the conductive polymer synthesized using the cellulose-based compound as the template and the conductive polymer synthesized using the different type of compound as the template are mixed such that the amount of one component thereof is 5% by weight or more.

Also, in the lithium-ion battery of the present invention, the active-material composition further includes carbon nanotubes in order to increase the density and conductivity of the electrode layer.

Also, in the lithium-ion battery of the present invention, the amount of the carbon nanotubes in the active-material composition is 5-300 parts by weight based on 100 parts by weight of the solid content of the conductive polymer binder.

Also, in the lithium-ion battery of the present invention, the carbon nanotubes include at least one selected from among single-walled carbon nanotubes, double-walled carbon nanotubes and multiple-walled carbon nanotubes, and the length of the carbon nanotubes is 5-100 *µ*m.

Also, in the lithium-ion battery of the present invention, the active-material composition is an anode active-material composition including an anode active material containing a silicon component as an active ingredient or an anode active material in which graphite is contained in the silicon component.

Also, in the lithium-ion battery of the present invention, the silicon component of the anode active material is silicon or silicon oxide, and when the anode active material is the anode active material containing the silicon component as the active ingredient, the amount of the anode active material is 10-85 wt% based on the total weight of the solid content of the anode active-material composition, or when the anode active material is the anode active material in which graphite is contained in the silicon or silicon oxide, the amount of the anode active material is 40-98 wt% based on the total weight of the solid content of the anode active-material composition.

Also, in the lithium-ion battery of the present invention, the amount of silicon or silicon oxide that is mixed with graphite is 1-90 wt% based on the total weight of the anode active material.

Also, in the lithium-ion battery of the present invention, the total solid content of the anode active-material slurry in an anode active-material slurry composition including the anode active-material composition is 5-60 wt%, and the anode has a thickness of 2-50 *µ*m.

Also, in the lithium-ion battery of the present invention, when the anode active material is an anode active material containing the silicon component alone as the active ingredient, the thickness of the anode layer is 5-40 *µ*m, or when the anode active material is a mixed anode active material in which graphite is contained in the silicon or silicon oxide, the thickness of the anode layer is 5-50 *µ*m.

Also, in the lithium-ion battery of the present invention, a thickener is further added to adjust the viscosity of the anode active-material slurry, and the thickener for adjusting the viscosity of the anode active-material slurry is a cellulose-based thickener including hydroxypropyl cellulose, ethyl cellulose or carboxymethyl cellulose, or an acrylic polymer compound having a weight average molecular weight of 1,000,000 g/mol or more.

Also, in the lithium-ion battery of the present invention, the active-material composition is a cathode active-material composition, and the cathode active material includes at least one selected from among lithium, manganese, nickel, cobalt and aluminum.

In the binder for use in an active-material composition of an anode or a cathode for a lithium-ion battery according to the present invention, the binder includes at least one selected from among a cellulose-based conductive polymer binder synthesized using a cellulose-based compound as a template, a mixed conductive polymer binder obtained by mixing the cellulose-based conductive polymer binder with at least one conductive polymer synthesized using a different type of compound as a template, and a cellulose-based conductive polymer binder synthesized using, as a template, a polymer compound having an exponential hydrogen ion concentration (pH) of 2-6 in an aqueous solution state.

In the binder for use in an active-material composition of an anode or a cathode for a lithium-ion battery according to the present invention, the template of the cellulose-based conductive polymer binder is a mixed template obtained by mixing the cellulose-based compound with an acrylic compound.

In the binder for use in an active-material composition of an anode or a cathode for a lithium-ion battery according to the present invention, the binder includes at least one selected from among poly(styrene sulfonic acid) (PSSA) and polyacrylic acid (PAA), and conductive polymers synthesized using the different type of compound as the template are mixed such that the amount of one component thereof is 5% by weight or more.

### Advantageous Effects

According to the present invention, when a lithium-ion battery is manufactured in a manner in which a binder is mixed with an anode active material or a cathode active material to afford an active-material composition, which is then applied on an electrode plate and dried, initial rate characteristics are not deteriorated and cycle life characteristics as determined through a continuous charge/discharge cycle test are improved. Moreover, adhesion to the metal electrode plate material is excellent, so the cathode active-material layer or the anode active-material layer adheres well to the electrode plate. In particular, the solution state of the active-material slurry in which the active material is mixed is viscous such that it feels like honey, and thus, when the active-material slurry is applied on the electrode plate in a mass-production line, very high coating workability can be exhibited.

In addition, the conductive polymer binder of the present invention is not highly acidic in the aqueous suspension state, so there is no concern about corrosion of components of the lithium-ion battery such as the electrode plate or the active material. Furthermore, lithium ions are less likely to cause side reactions with the binder material, ultimately improving the cycle life characteristics of the lithium-ion battery.

In particular, when using a composition in which the conductive polymer binder of the present invention, carbon nanotubes, and the electrode active material are mixed, good electrical conductivity can be exhibited even without the use of carbon black having a property of agglomeration. The uniformity and density of the electrode layer structure can be increased, whereby the lifetime of the battery can be increased and the thickness of the electrode layer can be decreased. Furthermore, due to the use of the electrode active material having a high capacity, even when the electrode layer is formed thinly (especially when the anode layer is formed thinly), the same capacity can be manifested. As the anode layer becomes thinner, the cathode layer can be made thicker or the active material for a cathode layer can be used in a larger amount, and thus the overall capacity of a lithium-ion battery having a given size can be increased, or a lithium-ion battery having a given capacity can be miniaturized. The technique of the present invention is very effective at preparing the anode active-material composition including the anode active material such as silicon particles or SiOx having a high theoretical capacity.

### Brief Description of Drawings

FIG. 1 shows the layer configuration of a lithium-ion battery using an active-material composition according to an embodiment of the present invention; and
FIG. 2 shows the layer configuration of a lithium-ion battery using an active-material composition according to another embodiment of the present invention.

### Mode for Invention

Hereinafter, a detailed description will be given of the present invention.

The present invention is technically characterized in that an active-material composition for a lithium-ion battery includes a conductive polymer synthesized using a cellulose-based compound as a template or a conductive polymer synthesized using, as a template, a polymer compound having an exponential hydrogen ion concentration (pH) of 2-6 in an aqueous solution state.

In the active-material composition for a lithium-ion battery according to the present invention, a conductive polymer synthesized using a cellulose-based compound as a template is first described below.

A conventional conductive polymer binder is limited in practical application thereof due to problems in which the conductive polymer binder is too acidic in the aqueous solution state or in which a completely new binder material is used rather than the conventionally used binder material and thus is incompatible with the existing active material. However, the cellulose-based compound of the present invention is mainly used as a binder material for the existing lithium-ion battery, and thus, when it is used by being conductively polymerized, compatibility thereof with the existing active material is very good, so there will be no difficulty in application thereof.

The conductive polymer of the present invention is a conductive polymer synthesized from a monomer for conductive polymer synthesis, such as aniline, pyrrole, thiophene or 3,4-ethylenedioxythiophene, or a modified monomer thereof for a modified conductive polymer, and is a conductive polymer synthesized using the cellulose-based compound as a polymer dopant and template in the conductive polymer. The surface resistance of this conductive polymer is preferably 10⁸ ohm/sq or less. It is preferred that the surface resistance of the synthesized conductive polymer be as low as possible, but if the surface resistance thereof is more than 10⁸ ohm/sq, the electrical conductivity is excessively low, and thus there is the concern that a sufficient effect cannot be obtained.

As for the cellulose-based compound useful as the template described above, any cellulose-based compound may be used, so long as it is able to dissolve in water through bonding of a portion of the -R component of the -OR group of the molecule thereof with a different compound, for example, a hydroxyl group or an alkyl (or alkylene) carboxyl (or carboxylate) group. Here, the length of the alkylene is preferably 1-4 carbon atoms. If the number of carbon atoms exceeds 4, the length of the alkylene group is too long, which may decrease solubility in water, which is undesirable.

Hereinafter, the present invention is described mainly focusing on PEDOT:CMC as the most preferred conductive polymer of the active-material composition. In the present invention, however, since PEDOT is synthesized using the preferred cellulose-based compound as the template and is utilized for a lithium-ion battery, the scope of the present invention is not limited to PEDOT:CMC used in the description below, but it is apparent that a conductive polymer synthesized using a different type of monomer for conductive polymer synthesis or a conductive polymer synthesized using a different type of cellulose-based compound will have the same effect. In addition, as described above, the present invention is intended to synthesize a new binder and utilize the same as a binder for mixing with the active material for a lithium-ion battery. Therefore, the present invention is described as being used for a mixed active material in which silicon oxide (SiOx), which are known to have poor charge/discharge cycle characteristics, are mixed with graphite. However, in the present invention, it is obvious that it may be applied to any active material regardless of the types of active materials, such as anode active materials, including graphite, silicon metal particles, SiOx and lithium-containing alloys, anode active materials including or compounded with the same (e.g. carbon nanotubes in which silicon is formed in the internal space thereof), and active materials in the form of particles, wires, flakes, etc. Moreover, it is apparent that it may be used as a binder that is mixed with a cathode active material to afford a cathode active-material slurry, which may then be used for a cathode.

As an example of the binder material used in the present invention, PEDOT:CMC is mainly described below. The process of synthesizing PEDOT:CMC of the present invention is as follows. Hereinafter, unless otherwise indicated in the present specification, % means wt%. PEDOT:CMC of the present invention is represented by Chemical Formula 1 below.

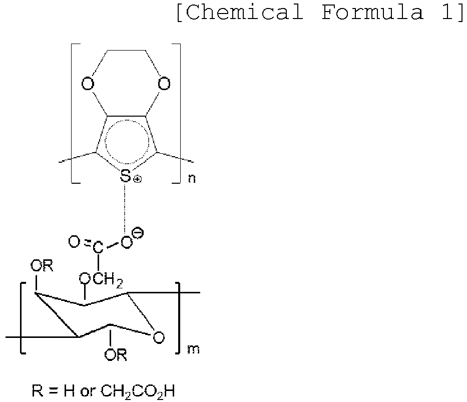

Here, n and m are each a natural number of 1 or more.

Specifically, a CMC template is dissolved in water such that the solid content thereof is 0.5-5 wt%. As such, if CMC does not dissolve well, it is efficiently dissolved in water through ultrasonic treatment or addition of a strong acid. Then, a monomer for conductive polymer synthesis, such as 3,4-ethylenedioxythiophene (EDOT), and an oxidizing agent, such as ammonium persulfate (APS), ferric sulfate, etc., are added thereto, mixed together, and stirred at a predetermined temperature, thus synthesizing PEDOT:CMC, followed by treatment with a dialysis tubing bag and an ion-exchange resin to remove unreacted impurities and ionic impurities, thereby obtaining a dark blue conductive polymer, namely PEDOT:CMC.

If the solid content of CMC dissolved in ultrapure water is less than 0.5 wt%, the amount of CMC is too low, and the synthesized conductive polymer precipitates during the synthesis reaction, or the conductivity is drastically decreased, which is undesirable. On the other hand, if the solid content thereof exceeds 5 wt%, the viscosity of the solution in which CMC is dissolved is excessively high, making it difficult to carry out post-processing, which is undesirable.

The molar ratio of the cellulose-based template compound, the conductive polymer monomer and the oxidizing agent is basically 1:1:1. However, conductive polymer binders having various properties may be synthesized by adjusting the molar ratio of these components. Here, the proportion of each component present in the synthesized solution is set such that, when the concentration of the template compound is 1 mol, the molar amount of the monomer EDOT is 0.5-5.0. If the molar amount of EDOT is less than 0.5, the conductivity of the synthesized conductive polymer is low, which is undesirable. On the other hand, if the molar amount thereof exceeds 5, the polymer synthesis does not proceed efficiently due to the use of excess monomer, or excess unreacted monomer remains, making the cleaning process complicated, which is undesirable. Moreover, the molar amount of the oxidizing agent is appropriately 0.8-3 relative to 1 mol of the monomer. If the molar amount of the oxidizing agent exceeds 3, the electrical conductivity of the synthesized PEDOT:CMC may decrease, which is undesirable. On the other hand, if the molar amount thereof is less than 0.8, electrical conductivity may decrease, which is undesirable. Most preferably, the molar amount of the oxidizing agent is 0.8-2.

CMC, which is the template of the present invention, is a cellulose-based compound that is modified with methylene (or commonly referred to as methyl) carboxylic acid or a salt compound thereof in order to dissolve the cellulose compound in water, and the degree to which the -R component of the -OR group in the repeating unit of the cellulose compound is substituted with a different compound, that is, the degree of substitution, is preferably at least 0.5. Here, a degree of substitution of 0.5 means that one -R per two repeating units is substituted with a carboxyl group. In general, the higher the degree of substitution, the better the preparation of PEDOT:CMC. If the degree of substitution is less than 0.5, the resulting compound does not dissolve well in water, and the electrical conductivity of PEDOT:CMC, which is a conductive polymer synthesized using the same as the template, is low, which is undesirable. Meanwhile, it is not necessary to particularly determine the upper limit of the degree of substitution. The reason for this is that, when the degree of substitution increases, the conductive polymer is more efficiently synthesized and the electrical conductivity of the synthesized PEDOT:CMC is high, which is consistent with the purpose of the present invention.

With regard to the cellulose-based compound of the present invention, it is advantageous to use a compound having a weight average molecular weight of 50,000-4,000,000 g/mol. If the molecular weight thereof is less than 50,000 g/mol, the synthesized PEDOT:CMC may precipitate in the form of particles, which is undesirable. On the other hand, if the molecular weight thereof exceeds 4,000,000 g/mol, it is difficult to dissolve CMC itself in water, which is undesirable. CMC and EDOT are used such that the molar amount of CMC is 0.2-5 relative to 1 mol of EDOT. Here, if the molar amount of CMC is less than 0.2 relative to EDOT, the synthesized PEDOT:CMC precipitates as particles and cannot be used as a binder for an active material, which is undesirable. On the other hand, if the molar amount thereof exceeds 5, the amount of the conductive polymer part in the synthesized PEDOT:CMC is too low, and the electrical conductivity thereof is extremely low, which is undesirable. Preferably, the molar amount thereof is 1.0-2.0.

The cleaning process after the synthesis of PEDOT:CMC of the present invention may be performed through a typical cleaning process after synthesis of organic materials. In general, pure PEDOT:CMC may be obtained by removing unreacted residue and ionic impurities using a dialysis tubing bag and an ion-exchange resin after the synthesis reaction. Since this cleaning process is similar to a typical cleaning process performed after synthesis of organic materials, the detailed cleaning process is a matter that may be determined through trial and error by those skilled in the art, and thus it is not necessary to particularly limit the cleaning process.

In order to control the solid content after synthesis and cleaning when synthesizing PEDOT:CMC of the present invention, the proportion of each of the monomer, the oxidizing agent, CMC, etc. may be adjusted based on the solid content.

PEDOT:CMC of the present invention is a conjugated conductive polymer that is inherently conductive, and it is obvious that it is not a simple mixture of a commercially available PEDOT system (i.e. PEDOT:PSS) and CMC used as a binder for existing batteries. PEDOT:CMC prepared by the above-described method is a compound in a complex form in which CMC is used as the template and a positive (+) PEDOT portion dissolved in water is electrically bound to a negative (-) CMC molecule by the action of the oxidizing agent. Therefore, it is apparent to those skilled in the art that PEDOT:CMC is not in the form in which PEDOT and CMC molecules are simply mixed.

When the cellulose-based compound of the present invention is used as the template, it is possible to synthesize a conductive polymer using a mixed template obtained by mixing the cellulose-based compound with a different type of polymer such as a sulfonated polystyrene polymer or an acrylic polymer at a weight ratio of (95:5)-(5:95).

If the weight ratio thereof falls out of the upper limit or the lower limit, any one component is dominant to the extent that it cannot be actually called a mixed template, and thus the properties of that compound, rather than a mixed template, are prevalent. Hence, the use of a mixed template falling in the above ratio range is preferable.

The method of preparing the active-material slurry using PEDOT:CMC of the present invention is similar to a conventional method of preparing an active-material slurry using an existing binder. Specifically, PEDOT:CMC of the present invention, the active material, carbon nanotubes and a conductivity-imparting agent may be uniformly mixed at a desired ratio.

Here, the amount (solid content) of PEDOT:CMC, which is the binder component contained in the PEDOT:CMC binder solution that is used, is appropriately 0.5-10 wt%. If the solid content thereof is less than 0.5 wt%, the resulting solution is too dilute, and thus the viscosity of the entire composition is excessively low despite the mixing of the active material, making it difficult to form an active-material electrode layer or greatly decreasing the thickness of the coating film, which is undesirable. On the other hand, if the solid content thereof is excessively high, the viscosity is too high upon preparation of a slurry, making it difficult to prepare the slurry, which causes a problem in that it is required to add water again.

When manufacturing a lithium-ion battery, carbon nanotubes are preferably used therewith in order to further increase the electrical conductivity of the active-material layer, increase the density of the electrode layer itself made of the active material, and maintain the electrically conductive pathway even after repeated expansion/contraction. Examples of the carbon nanotubes useful in the present invention may include single-walled carbon nanotubes, double-walled carbon nanotubes, and multiple-walled carbon nanotubes, which may be used alone or in combination thereof.

The amount of carbon nanotubes is 5-300 parts by weight based on 100 parts by weight of the solid content of the conductive polymer binder. If the amount of carbon nanotubes is less than 5 parts by weight, there is no effect of mixing carbon nanotubes due to the very low use thereof, which is undesirable. On the other hand, if the amount thereof exceeds 300 parts by weight, the viscosity may be drastically increased due to the use of excess carbon nanotubes, and thus handling thereof is difficult or the effect of improving charge/discharge cycle characteristics does not increase proportionally therewith, so there is no need to use carbon nanotubes in a large amount.

It is also advantageous to use carbon nanotubes having a length of 5-100 *µ*m. This is because carbon nanotubes must have a certain length in order to make the structure of the electrode layer material effectively dense. If the length of the carbon nanotubes is less than 5 *µ*m, the length thereof is too short, and the increase in the density of the electrode layer material is insignificant, which is undesirable. On the other hand, if the length thereof exceeds 100 *µ*m, the corresponding carbon nanotubes are not dispersed well when mixed with the active material, which is undesirable.

The conductive polymer binder of the present invention is inherently electrically conductive, but may be used in combination with conductive carbon black, as in existing lithium-ion batteries, rather than being used alone.

Moreover, in order to further increase the electrical conductivity of the electrode layer made of the active material, a conductive carbon nanomaterial, for example, carbon nanotubes, graphene, etc., may be used in addition to conductive carbon black. In particular, since carbon nanotubes have a very large aspect ratio, carbon nanotubes, alone or in combination with carbon black, may be mixed with the conductive polymer binder to thus realize the same effect. Based on the results of testing by the present inventors, it is confirmed that the use of carbon nanotubes enhances adhesion between the active material and the electrode plate.

The present invention pertains to the synthesis of a conductive polymer using a cellulose-based polymer as a template and the use thereof as a binder material in the preparation of an active-material composition for a lithium-ion battery. Thus, it may be applied to all types of active materials regardless of the type of active material, for example, an anode active material made of graphite or a silicon component (e.g. silicon oxide: SiOx or lithium-silicon-containing alloy material), a mixed active material including one or more of these components (e.g. a mixed graphite/silicon oxide active material), or a composite active material in which these and other components are compounded (e.g. carbon nanotubes made by placing silicon particles in the internal space thereof). In the case of graphite in the anode active material, since graphite itself is an electrically conductive material, there is no need to further add a conductive material such as conductive carbon black or carbon nanotubes thereto, or alternatively, conductive carbon black may be separately added thereto.

When the anode active-material slurry composition is prepared using PEDOT:CMC of the present invention, the weight ratio of the active material and the binder may vary when an active material having a high theoretical capacity is used alone and when it is used in the form of a mixed active material in combination with graphite.

When using a mixed anode active material in which an active material having a high theoretical capacity (e.g. a silicon-based active material) is mixed with graphite, an active-material slurry may be prepared using 40-98 wt% of the mixed active material, with the remainder being PEDOT:CMC binder of the present invention and carbon nanotubes, based on the weight of each component. If the amount of the mixed active material is less than 40 wt%, in order to achieve the desired capacity, the anode active-material slurry has to be thick, resulting in an excessively thick wet coating in the manufacturing process, which is undesirable. On the other hand, if the amount thereof exceeds 98 wt%, the relative amounts of the binder and carbon nanotubes may decrease, thus decreasing adhesion to the electrode plate or the density of the electrode layer itself, which is undesirable. Taking into consideration the adhesion between the electrode layer and the electrode plate and the density of the electrode layer, the solid content of the mixed active material is preferably 50-95 wt%.

When using a mixed active material in which an active material having a high theoretical capacity, such as a silicon-based active material, is mixed with graphite, the amount of the silicon-based active material that is mixed with graphite may be 1-90 wt% based on 100 wt% of the mixture of graphite and silicon-based active material. If the amount of the silicon-based active material that is mixed with graphite is less than 1 wt%, the effect of mixing the silicon-based active material may become insignificant. On the other hand, if the amount thereof exceeds 90%, the use of excess silicon-based active material is almost the same as the use of a silicon-based active material alone, and thus there is little motivation to use the mixed active material.

However, when the silicon-based active material, that is, the anode active material in the form of silicon metal particles, SiOx or lithium alloy, is used alone or in combination with other silicon-based active materials (not including graphite), the amount of the active material may be adjusted to about 10-85 wt% depending on the desired capacity. No matter how high the theoretical capacity is, if the amount of the active material is less than 10 wt%, the relative amounts of the binder and carbon nanotubes are excessively high, making it difficult to manufacture a battery having a desired capacity, which is undesirable. On the other hand, if the amount thereof exceeds 85 wt%, in order to ensure the desired capacity, the thickness of the coating film formed on the electrode plate is very low, which is undesirable in the manufacturing process.

Here, PEDOT:CMC of the present invention and carbon nanotubes, etc. are mostly dispersed in a solvent such as water, etc., and thus, when preparing a slurry, the amount of each component is calculated based on the solid content, and is then added.

The solid content of the slurry, obtained by mixing all of the above components with sufficient stirring, is influenced by the solid content of each component that is added thereto. Since the slurry is a suspension for forming an electrode layer, a solid content suitable for efficient electrode layer formation is selected and used. Preferably, it is advantageous for the total solid content of the slurry to be about 5-60%. If the solid content of the slurry is less than 5%, the viscosity thereof becomes too low, and thus, when the desired electrode layer needs to be thick, the film-forming process becomes problematic due to the thickness of the solution being too great (wet thickness). On the other hand, if the solid content thereof exceeds 60%, the resulting slurry is very viscous, making it difficult to form a thin electrode layer, which is undesirable.

When the amount of the anode active-material composition is low, in some cases, the viscosity of the slurry is too low, making it difficult to form an electrode layer. Here, as necessary, a thickener may be further added to adjust the viscosity of the slurry required for electrode formation. As such, the thickener that is used is mainly a cellulose-based thickener, and any cellulose-based thickener may be used regardless of the type of functional group. In particular, since some cellulose is used as a binder material for a graphite active material, it does not have a particularly significant adverse effect on the performance of the battery. Examples of the typical cellulose-based thickener belonging thereto may include hydroxypropyl cellulose, ethyl cellulose, carboxymethyl cellulose and the like. It will be obvious to those skilled in the art that the amount of the cellulose-based thickener may be determined through trial and error, and thus it is not necessary to particularly limit the amount of the thickener in the present invention. Moreover, an acrylic polymer compound having a high molecular weight may be used as a thickener, in which the high molecular weight indicates a weight average molecular weight of at least 1,000,000 g/mol. A polymer having a weight average molecular weight of less than 1,000,000 g/mol is disadvantageous in that it is difficult to use because it does not have high viscosity when dissolved in water. Here, when the viscosity of the polymer increases in the state of being dissolved in water, the amount of the acrylic polymer that is mixed therewith may be decreased, and thus it is not necessary to set an upper limit of the molecular weight thereof.

When a lithium-ion battery is manufactured using the active-material composition of the present invention, the appropriate coating thickness of the anode layer is 2-50 *µ*m. Here, the thickness of the electrode layer is the final thickness of the electrode layer after the rolling process. In the case of an anode active material having a high theoretical capacity, the electrode layer may be formed not thickly but thinly, and thus it is not necessary to form a thick electrode layer. If the thickness of the anode layer is less than 2 *µ*m, it is difficult to form a thin coating film despite the use of the active material having a high theoretical capacity, which is undesirable. On the other hand, if the thickness thereof exceeds 50 *µ*m, the thickness of the cathode layer is not proportional to the increase in the capacity of the anode layer, and hence, the anode layer need not be thicker than necessary. In particular, when the silicon-based active material is mainly used, the capacity of the anode layer including the silicon-based active material is sufficiently high, and thus the thickness of the anode layer is set to 40 *µ*m. Preferably, the anode layer has a thickness of about 5-50 *µ*m so as to be suitable for various purposes. For example, when an anode active material is composed exclusively or mainly of a silicon-based active material, a thickness of about 25 *µ*m is appropriate in consideration of the thickness or capacity of the entire lithium-ion battery. When the silicon-based active material is further added with graphite, in order to increase the capacity with the same thickness, the anode layer may be formed up to the upper-limit thickness (50 *µ*m), but in consideration of reducing the thickness of the anode layer according to the present invention, the thickness of the anode layer may be about 40 *µ*m even when using the graphite-mixed active material. Although the amount of the silicon-based active material may be increased and thus the thickness of the anode layer may be decreased according to the present invention, taking into consideration the convenience or stability of coating film formation and the theoretical capacity, the thickness thereof may be 5 *µ*m or more in both cases, that is, the case in which silicon is used alone and the case of combined use. The solid content of the active-material slurry, obtained by mixing all of the above components with sufficient stirring, is influenced by the solid content of each component that is added thereto, and since the slurry is a suspension for forming an electrode layer, a solid content suitable for efficient electrode layer formation is selected and used. Also, in the formation of the electrode layer by applying the active-material slurry on the electrode plate, the appropriate thickness of the electrode layer after drying and rolling may be determined through trial and error in consideration of the desired capacity and convenience in the manufacturing process, which is apparent to those skilled in the art. Therefore, in the present invention, it is obvious that there is no need to particularly limit the solid content or the thickness of the electrode layer.

When the amount of the anode active-material composition is low, in some cases, the viscosity of the slurry is too low, which may make it difficult to form an electrode layer. Here, as necessary, a thickener may be further added in order to adjust the viscosity of the slurry required for electrode formation. The thickener that is used may be mainly an acrylic thickener or a cellulose-based thickener. It is obvious to those skilled in the art that the molecular weight or amount of the thickener may be determined through trial and error, and thus it is not necessary to particularly limit the amount of the thickener in the present invention.

When preparing the active-material slurry using the composition of the present invention, a carbonate additive may be further added as needed. The electrolyte for a lithium-ion battery is used by dissolving a lithium compound in a carbonate solvent. In this case, the solvent is used by mixing various types of carbonate solutions, rather than alone. Therefore, a similar method may be applied to the active-material composition of the present invention. For example, when LiPF₆ is used as the lithium compound, the carbonate solvent may include various carbonate solvents such as ethyl carbonate, dimethyl carbonate, diethyl carbonate, propylene carbonate, vinylene carbonate, ethyl methyl carbonate, fluoroethyl carbonate and the like, which may be used in combination.

When a mixed conductive polymer binder, obtained by mixing the PEDOT:CMC synthesized in the present invention with a different type of conductive polymer, is used, better results may be obtained. For example, when PEDOT:CMC, which is a conductive polymer binder synthesized using the cellulose-based compound of the present invention as a template, is mixed with PEDOT:PSS, which is a conductive polymer synthesized using sulfonated polystyrene as a template, or with PEDOT:PAA, which is a conductive polymer synthesized using an acrylic polymer as a template, it is advantageous because undesirable properties that may occur when using one type of binder may be compensated for.

When the mixed conductive polymer binder is used, the mixing ratio of PEDOT:CMC and the conductive polymer binder that is mixed therewith may be used at a weight ratio of (95:5)-(5:95). If the mixing ratio thereof falls out of the upper limit or the lower limit, one of the properties is too strongly apparent, making it impossible to serve as a mixed conductive polymer binder, which is undesirable. When three or more conductive polymer binders are mixed, it is preferable that each conductive polymer binder to be mixed be contained in an amount of 5% by weight or more.

Also, it is obvious that PEDOT:CMC of the present invention (or PEDOT:cellulose synthesized using the cellulose-based compound as a template) may be used as a binder for a cathode active material, such as lithium-cobalt oxide (LCO), nickel-cobalt-manganese (NCM), nickel-cobalt-aluminum (NCA), etc. Moreover, the binder material of the present invention is not limited as to the shape of an anode or cathode active material, that is, an active material having a special shape, such as the shape of particles, nanowires or a pyramid, but may be applied to all active materials having any type of shape. In addition, when PEDOT:CMC of the present invention is used as the binder, the weight ratio of various components used in preparing the cathode active-material slurry may be the amount ratio used above. Briefly, the cathode active-material slurry may be prepared by applying the composition ratio of the anode active material to the cathode active material.

The method of mixing and dispersing the PEDOT:CMC binder of the present invention, the anode active material, and the carbon nanotubes or carbon black may include typical dispersion processes using a planetary centrifugal mixer (C-mixer), a high-pressure homogenizer, an attrition mixer, a sonicator, a sand ball mill, a low-speed stirrer and a highspeed stirrer, which may be used alone or in combination.

In addition, a description is given of a conductive polymer binder synthesized using, as a template, a compound having a pH of 2-6 in an aqueous solution state, in the active-material composition for a lithium-ion battery.

The use of a conductive material as the binder is advantageous because the conductivity of the conductive material is maintained in the active material that is mixed therewith. However, PSSA, which is used as a template in PEDOT:PSSA, which is a conventional conductive polymer binder, is sulfonic acid, and exhibits strong acidity with an exponential hydrogen ion concentration of about 1.0-1.5, and also, lithium is bound to SO₃⁻ ions, thus degrading mobility and adversely affecting the lifetime and capacity of the battery.

In the technique for using the conductive polymer itself as a binder material, for example, using poly(3,4-ethylenedioxythiophene) (PEDOT), which is a representative conductive polymer, a conjugated conductive polymer is configured such that a conductive polymer that imparts conductivity, for example, a PEDOT portion, is a conductivity-imparting portion and a so-called template compound electrically bound to the PEDOT portion allows the conductive polymer to dissolve in a solvent such as water, etc. Here, the behavior thereof in the aqueous solution state varies greatly depending on the type of template compound that is used. For example, poly(styrene sulfonic acid) (PSSA), which is a representative template, is a strongly acidic compound in the state of being dissolved in water, and when a conductive polymer synthesized using such a template is used as a binder for an active material for a battery, it is strongly acidic in the aqueous solution state (or state of dispersion in water) (the exponential hydrogen ion concentration is less than 2.0 in the state of dispersion in water), thus causing corrosion of the electrode plate or reacting with lithium ions moving from the cathode layer to the anode layer during initial charge and discharge to thus form a PEDOT:PSS-Li compound, whereby lithium ions to be used in the charging and discharging process are consumed, undesirably lowering the so-called coulomb efficiency.

Therefore, in the present invention, a conductive polymer is synthesized using a weakly acidic compound having lower acidity, namely a compound having appropriate acidity, as a template, rather than a strongly acidic polystyrene sulfonic acid (PSSA) compound, and is utilized as a binder material for a lithium-ion battery. A representative conductive polymer (hereinafter referred to as PEDOT:PSSA) including poly(3,4-ethylenedioxythiophene) (PEDOT), synthesized using poly(styrene sulfonic acid) (PSSA) as a template, shows strong acidity when a sulfonic acid component of the PSSA template, which does not participate in electrical bonding upon doping with PEDOT, comes into contact with water, resulting in high corrosion. In particular, the possibility of lithium ions, which are the main component of the lithium-ion battery, being consumed by coupling the SO₃⁻ anion component of PSSA with lithium ions moving through the electrolyte is very high. Thus, the use of a strongly acidic compound as a template causes corrosion of the active material, thus degrading battery performance or consuming lithium ions, which adversely affects cycle characteristics.

Therefore, the present invention is intended to prevent the cycle life characteristics of the lithium-ion battery from deteriorating due to corrosion of the active material or consumption of the lithium ions when a conductive polymer such as PEDOT shows strong acidity in the state of being dispersed in water. Any compound that does not exhibit strong acidity in the state of being dispersed in water may meet the purpose of the present invention. In the present invention, appropriate acidity means that the exponential hydrogen ion concentration (pH) in the aqueous solution state falls in the range of 2-6. If the pH is lower than 2, the acidity is so strong that when used as a binder, the loss of lithium ions is high, which is undesirable. On the other hand, if the pH is higher than 6, the acidity is so weak that it is difficult to act as a dopant in the synthesis of PEDOT, which is undesirable.

The conductive polymer of the present invention is synthesized from a monomer for conductive polymer synthesis such as aniline, pyrrole, thiophene or 3,4-ethylenedioxythiophene or a modified monomer thereof for a modified conductive polymer, and is a conductive polymer using, as a template, a water-soluble acrylic polymer that is a compound of pH 2-6 in the conductive polymer. The resistance of this conductive polymer is preferably 10⁵ ohm/sq or less.

The compound of pH 2-6 capable of being used as the template described above is a polymer having a water-soluble carboxyl group, carbonate group, or acrylic acid group. The most preferred compound is a water-soluble acrylic acid compound. In particular, polyacrylic acid (PAA), among water-soluble acrylic acid compounds, is most preferable because it has an exponential hydrogen ion concentration (pH) in the range of 2-6 and is advantageous for the synthesis of 3,4-ethylenedioxythiophene, which is very useful as a conductive polymer.

Hereinafter, the present invention is described mainly focusing on poly(3,4-ethylenedioxythiophene) (PEDOT) as the most preferred conductive polymer of the active-material composition. In the present invention, however, PEDOT is synthesized using the preferred water-soluble acrylic polymer as a template, and is utilized for a lithium-ion battery, and thus, it is obvious that the scope of the present invention is not limited to PEDOT used in the description below, but that different types of conductive polymers have the same effect. In addition, PAA, which is an acrylic polymer of the present invention, is merely an example of a water-soluble acrylic polymer, and any polymer compound having a pH of 2-6 capable of being used as a template for the synthesis of a conductive polymer may be used, and an acrylic compound is particularly preferable.

As described above, the present invention aims to synthesize a new binder and utilize the same as a binder for mixing with the active material of a lithium-ion battery. Therefore, in the present invention, the case in which silicon nanoparticles, which are known to have the worst charge/discharge cycle characteristics, are used as the anode active material is described.

However, as can be seen in the examples, the new binder of the present invention is applicable not only to the silicon-based anode active material, but also to various types of electrode active materials, such as a conventional graphite-based anode active material and a nickel-cobalt-manganese (NCM) cathode active material.

This new binder is not conventionally used as a binder for a lithium-ion battery, and is a binder that is inherently electrically conductive and is capable of further stabilizing the electrical conductivity of the cathode active-material composition when mixed with conductive carbon black.

PEDOT:PAA, which is the most preferable binder material used in the present invention, is described below.

The process of synthesizing PEDOT:PAA of the present invention is as follows.

Specifically, a 3,4-ethylenedioxythiophene (EDOT) monomer, an oxidizing agent such as ammonium persulfate (APS), ferric sulfate, etc., and PAA are weighed, mixed with water, and stirred at a predetermined temperature, thus inducing a PEDOT synthesis reaction. As the PEDOT:PAA synthesis reaction proceeds, the reaction solution turns dark blue. The solution thus synthesized is treated using a dialysis tubing bag to remove impurities therefrom, added with an appropriate ion-exchange resin, and stirred again to thus remove ionic impurities remaining in the reaction solution, thereby yielding PEDOT:PAA. Here, when an auxiliary agent such as ferric sulfate or the like is used therewith, it is advantageous in obtaining a PEDOT:PAA compound having a small particle size.

In the synthesis of PEDOT:PAA of the present invention, the molar amount of EDOT that is mixed with water is 0.5-5.0. If the molar amount of EDOT is less than 0.5, the electrical conductivity of the synthesized conductive polymer is low, which is undesirable. On the other hand, if the molar amount thereof exceeds 5, the polymer synthesis does not proceed efficiently due to the use of excess monomer, or excess unreacted monomer remains, making the cleaning process complicated, which is undesirable.

The molar ratio of the oxidizing agent and EDOT used in the synthesis reaction of the present invention is maintained at 1:0.8-1:3 because it is ideal to oxidize one EDOT by one oxidizing agent molecule. If the molar amount of the oxidizing agent relative to EDOT exceeds 3, the conductivity may decrease. On the other hand, if the molar amount of the oxidizing agent is less than 0.8, the conductivity may also decrease. Preferably, the molar amount of the oxidizing agent is 0.8-2, and as mentioned above, when the molar amount thereof is 1, high conductivity is more preferably obtained. However, since the electrical conductivity of the synthesized PEDOT:PAA depends on the above molar ratio, the molar ratio of the oxidizing agent and EDOT is adjusted in order to ensure the desired electrical conductivity.

PAA, which is the most important component of the present invention, is basically a water-soluble polymer, and is an acrylic polymer having a weight average molecular weight of 50,000-4,000,000 g/mol, and the molar amount of PAA used for the synthesis reaction is 0.5-5 relative to EDOT. Here, if the molar amount of PAA relative to EDOT is less than 0.5, the amount of PEDOT in the synthesized PEDOT:PAA is too high, so the synthesized conductive polymer is not present in a solution phase but is present in the form of large particles, making it difficult to serve as a binder for a lithium-ion battery, which is undesirable. On the other hand, if the molar amount of PAA relative to EDOT exceeds 5, the amount of PAA is excessively high and the conductivity of the synthesized conductive polymer is too low, making it unsuitable for use as a binder, which is undesirable. Preferably, the molar amount of PAA relative to EDOT is 1.0-2.0.

Also, if the molecular weight of PAA is less than 50, 000 g/mol, the molecular weight of PAA is too low and PAA cannot function as a template, so the synthesized PEDOT:PAA is in the form of large particles, which is undesirable. On the other hand, if the molecular weight thereof exceeds 4,000,000 g/mol, PAA does not dissolve well in water, or the synthesized PEDOT:PAA is very viscous and thus inconvenient to use, which is undesirable.

The cleaning process after the synthesis of PEDOT:PAA of the present invention may be performed through a process similar to the cleaning process after synthesis of organic materials. Specifically, the reaction solution includes, in addition to the PEDOT:PAA that is synthesized, large amounts of impurities such as unreacted monomer, oxidizing agent, etc. Therefore, first, the impurities are filtered out using a dialysis tubing bag, and then the dialyzed reaction solution is added with a mixture of a cation-exchange resin and an anion-exchange resin in appropriate amounts and allowed to stand to remove residual ions, or these exchange resins are placed in a column to form an ion-exchange column and the dialyzed reaction solution is passed through the ion-exchange column to thus remove residual ions. Here, the pore size of the dialysis tubing bag that is used and the type of ion-exchange resin may be easily determined through trial and error, and thus it is not necessary to particularly limit the type of dialysis tubing bag, the type of ion-exchange resin, or the method thereof.

In order to control the solid content after synthesis and cleaning when synthesizing PEDOT:PAA of the present invention, the proportion of each of the monomer, the oxidizing agent, and the water-soluble acrylic polymer may be adjusted based on the solid content.

When manufacturing a lithium-ion battery, it is necessary to prepare an active-material slurry by uniformly mixing components such as the active material and carbon black with the PEDOT:PAA solution of the present invention, used as a binder material. Here, the solid content in the PEDOT:PAA binder solution that is used (the amount of PEDOT:PAA in the binder solution) appropriately falls in the range of 1.0-5%. In the preparation of the composition depending on the type of active material, the viscosity of the composition may vary depending on the amount ratio of the active material, the binder, and the conductive material, which may affect the formation of an electrode material layer upon coating of the electrode plate with the active-material composition. Here, if the solid content thereof is less than 1.0%, the solution is too dilute, and thus, even when the active material is mixed, the viscosity of the entire composition is too low to form an active-material film, or the thickness of the coating film becomes too low or the amount of the solvent is too high, and thus, due to problems related to washing of lithium on the surface of the active material, even when the binder is mixed with a conductive component such as carbon black or carbon nanotubes, the improvement in charge/discharge cycle characteristics is insignificant, which is undesirable. On the other hand, if the solid content thereof exceeds 5%, the charge/discharge cycle characteristics become good, but the amount of the PEDOT:PAA aqueous suspension that is added in the preparation of the active-material composition is too small, making it difficult to prepare the active-material composition, or it is difficult to prepare the PEDOT:PAA solution itself and a precipitate may occur, which is undesirable.

In the manufacture of a lithium-ion battery, when the cathode active-material particles and the binder are mixed, conductive carbon black is used therewith. This carbon black is mixed in the binder and serves to increase the electrical conductivity of the electrically insulative binder component.

The conductive polymer binder of the present invention is inherently electrically conductive, but may be used in combination with conductive carbon black, as in existing lithium-ion batteries, rather than being used alone.

Moreover, in addition to the conductive carbon black, a conductive carbon nanomaterial, for example, carbon nanotubes, graphene, etc. may be used. In particular, since carbon nanotubes have a very large aspect ratio, carbon nanotubes, alone or in combination with carbon black, may be mixed with the conductive polymer binder to thus realize the same effect. Based on the results of testing by the present inventors, it is confirmed that the use of carbon nanotubes enhances adhesion between the active material and the electrode plate.

The present invention pertains to the synthesis of a conductive polymer using a water-soluble acrylic polymer (PEDOT:PAA) as a template and the use thereof as a binder material in the preparation of an active-material composition for a lithium-ion battery. Therefore, it may be applied to all types of active materials regardless of the type of active material, for example, graphite, silicon nanoparticles or other anode active materials, and mixed anode active materials thereof. In the case of graphite in the anode active material, since graphite itself has high electrical conductivity, there is no need to further add a conductive material such as conductive carbon black or carbon nanotubes thereto. Moreover, it is obvious that it may be used as a binder for various cathode active materials, such as lithium-cobalt oxide (LCO), nickel-cobalt-manganese (NCM), or nickel-cobalt-aluminum (NCA) . Also, the binder material of the present invention is not limited as to the shape of an anode or cathode active material, that is, an active material having a special shape, such as the shape of particles, nanowires or a pyramid, but may be applied to all active materials having any type of shape. When PEDOT:PAA of the present invention is used as the binder, the amount ratio of cathode active material (or anode active material), binder and conductive carbon black or carbon nanotubes may be used as described above.

The method of mixing and dispersing the PEDOT:PAA binder of the present invention, the cathode active material (or anode active material) and carbon black or carbon nanotubes may include typical dispersion processes using a variety of high-performance solution kneaders, such as a planetary centrifugal mixer (C-mixer), a high-pressure homogenizer, an attrition mixer, a sand ball mill, etc.

Based on the test results, when the binder of the present invention is used, even if the amount of the cathode active material is increased up to 30% compared to the existing amount, the cathode active-material suspension may be applied and dried on the surface of the metal electrode plate, whereby the cathode plate may be manufactured without difficulty and the battery may work efficiently. This is because PEDOT:PAA of the present invention exhibits high interfacial adhesion to the active material and high adhesion to the metallic electrode plate material such as copper foil or aluminum foil. In particular, when carbon nanotubes are used therewith, it is confirmed that the adhesion between the electrode plate and the electrode material is further increased.

The above description of the present invention may also be applied in the case of using, as a template, a compound of pH 2-6, which is not strongly acidic, like PSSA.

A better understanding of the present invention will be given through the following examples and comparative examples. However, the following examples are merely set forth to illustrate the present invention and are not to be construed as limiting the scope of the present invention. Moreover, the charge/discharge cycle test of the present invention was performed under the condition that the rate was initially raised to 0.1C-0.5C and then fixed at 0.5C. Therefore, the initial capacity of Examples of the present invention and Comparative Examples means the capacity after 3 cycles, and the capacity retention rate is a numerical value comparing the capacity after 3 cycles and the capacity after the last cycle. In the lithium-ion battery, the retention rate of the initial capacity (capacity retention rate or residual ratio) during repeated charge/discharge is regarded as very important. Therefore, in some cases, Examples of the present invention were described mainly focusing on a capacity retention rate.

### <Examples 1 and 2 and Comparative Example 1> Synthesis of PEDOT:CMC

Examples 1 and 2 relate to PEDOT:CMC synthesis. CMC having a degree of substitution of 0.9 was used in Example 1, and CMC having a degree of substitution of 1.2 was used in Example 2. Also, CMC having a substitution degree of 0.4 was used in Comparative Example 1.

Hereinafter, the process of synthesis of PEDOT:CMC is described using CMC having a substitution degree of 0.9.

Specifically, CMC (weight molecular weight: 450,000 g/mol, degree of substitution: 0.9, available from Sigma-Aldrich) was dissolved in an amount of 2 wt% in water, after which EDOT, CMC and an oxidizing agent were placed at a molar ratio of 1:1:1 in a vessel and stirred to thus induce synthesis of a conductive polymer. Here, it is common to add a conductive polymer monomer in an amount slightly greater than the molar ratio of these components.

5.6 g of CMC, 2.98 g of EDOT, and 4.56 g of APS were added to 200 g of water in a three-neck flask and mixed with stirring for 5 min, followed by synthesis with stirring at room temperature for 48 hr.

The solution subjected to the above synthesis reaction was placed in a dialysis tubing bag (a cellulose-based tubular membrane) and sealed, and the bag was then placed in a vessel containing ultrapure water and dialyzed for 24 hr to remove unreacted monomer. Here, when the color of the water in which the dialysis tubing bag was placed was yellow, the unreacted monomer was regarded as removed. Then, an anion-exchange resin (available from Lewatit, MP62) and a cation-exchange resin (available from Lewatit, S100) at a weight ratio of 1:1 were added in amounts of 30 parts by weight, based on 100 parts by weight of the solution, to the dialyzed reaction solution, followed by ion-exchange treatment for 5 hr to remove residual ionic components. Then, filtration was performed using a 400-mesh screen, thus obtaining a dark blue solution. Here, the dark blue solution is a PEDOT:CMC aqueous suspension, which is a conductive polymer solution in which PEDOT:CMC is dispersed.

In Example 2 and Comparative Example 1, PEDOT:CMC was synthesized in the same manner as in Example 1, with the exception that CMC having a degree of substitution of 1.2 and CMC having a degree of substitution of 0.4 were used, respectively.

As the conductive polymer thus obtained, PEDOT:CMC of Example 1 had a surface resistance of 10⁷ ohm/sq and a viscosity of 250 cP, and the dark blue conductive polymer of Example 2 had a surface resistance of 10⁶ ohm/sq and a viscosity of 320 cP. On the other hand, in Comparative Example 1, CMC itself was not dissolved in water, and thus a very long period of time was required to dissolve the same compared to Examples 1 and 2, and the surface resistance of the synthesized PEDOT:CMC was measured to be 10⁹ ohm/sq or more.

### <Examples 3 and 4>

Examples 3 and 4 were the same as Example 2, with the exception that a mixture of CMC and PAA (molecular weight: 450,000 g/mol, available from Sigma-Aldrich) was used as the template. The weight ratio of CMC to PAA was 5:5 in Example 3 and was 7:3 in Example 4.

All of the conductive polymers thus prepared (PEDOT:CMC/PAA) appeared dark blue, and the surface resistance values of these conductive polymers were measured to be 10⁵ ohm/sq in Example 3 and 10⁶ ohm/sq in Example 4. Thereby, it was confirmed for the mixed template that the surface resistance was lowered when the amount of the PAA was high.

### <Example 5 and Comparative Example 2> Mixed graphite/SiOx (90:10) active material

In Example 5, the PEDOT:CMC solution prepared in Example 1 was applied to a mixed active material of graphite (theoretical capacity: 370 mAh/g) and SiOx (theoretical capacity: 1,400 mAh/g).

An anode active-material slurry was prepared by mixing the PEDOT:CMC of Example 1 with a mixed graphite/SiOx (weight ratio: 90:10, theoretical capacity: 473 mAh/g) active material and carbon nanotubes (single-walled carbon nanotubes) . Here, the PEDOT:CMC, the mixed active material and the carbon nanotubes were mixed at a weight ratio based on solid content of 5:90:5. The mixture of the components was placed in a C-mixer, kneaded three times for 10 min each at 2,000 rpm, treated once for 10 min using a sonicator, and finally stirred for 10 min using a C-mixer, thus preparing an electrode material composition. Based on the results of confirmation of the flow state of the active-material slurry thus prepared, the flow state of the anode active-material slurry was similar to that of honey. Thereby, it was confirmed that when the active-material slurry is prepared using PEDOT:CMC of the present invention, no problem is expected to occur in the coating process in a battery mass-production line.

The above composition was dried and rolled on a copper foil, after which an anode layer was formed to a thickness of 30 *µ*m.

An adhesion test was performed in a manner in which a piece of Scotch tape was attached to the surface of the anode plate thus manufactured and then peeled off therefrom, based on which it was confirmed that the electrode material layer was adhered well to the electrode plate without being separated therefrom.

A coin cell (CR2032) having a half-cell structure was manufactured using the anode plate thus manufactured, and a charge/discharge cycle test thereof was performed at a rate of 0.5C. Here, a lithium metal foil was used as the counter electrode, and the electrolyte that was used was an electrolytic solution prepared by dissolving 1.15 mol of LiPF₆ in a mixed carbonate solvent of ethylene carbonate (EC), propylene carbonate (PC), diethyl carbonate (DEC), vinylene carbonate (VC) and fluoroethylene carbonate (FC) (weight ratio of EC:DEC:VC:FEC = 3:7:0.05:0.05). Manufacture of the coin cell was carried out in a glove box filled with argon gas.

Comparative Example 2 was the same as Example 5, with the exception that CMC, which is not a conductive polymer but is electrically non-conductive and is conventionally useful as a binder for an anode active material, was used as the binder material. Based on the results of the adhesion test on the anode active-material layer manufactured in Comparative Example 2, it was confirmed that the anode active-material layer was easily peeled off from the electrode plate using Scotch tape.

Based on the results of the charge/discharge cycle test of the coin cells manufactured as described above, in Example 5, the discharge capacity after 3 cycles was 445 mAh/g, and the discharge capacity after 50 cycles was 440 mAh/g, indicating that there was little reduction in initial capacity. On the other hand, in Comparative Example 2, the discharge capacity values after 3 cycles and 50 cycles were measured to be 452 mAh/g and 373 mAh/g, respectively. With regard to the curve describing the extent of reduction of the lifetime, in Example 5, there was almost no difference in discharge capacity after 3 cycles and 50 cycles, indicating a capacity retention rate of 95% or more. However, in Comparative Example 2, a capacity retention rate of about 82% was measured. In particular, in Comparative Example 2, it was observed that the capacity continued to decrease even after 50 charge/discharge cycles, from which the capacity appears to further decrease with an increase in the number of cycles.

As is apparent from the results of Example 5 and Comparative Example 2, vastly superior battery characteristics were exhibited when using, as the binder, PEDOT:CMC synthesized using CMC as the template, compared to when using the conventional CMC itself as the binder.

### <Comparative Example 3> Flow-state comparison (PEDOT:PAA)

Comparative Example 3 was the same as Example 5, with the exception that PEDOT:PAA (Example 16) was used as the conductive polymer binder in order to compare the flow state of the anode active-material slurry.

Based on the results of confirmation of the flow state of the anode active-material slurry prepared as described above, the anode active-material slurry of Comparative Example 3 showed intermittent dripping like pudding when placed in a vessel and tilted.

As shown in the results of Example 5 and Comparative Example 3, the anode active-material slurry prepared using the PEDOT:CMC of the present invention as the binder flowed like honey, based on which the PEDOT:CMC binder of the present invention was found to be more suitable for the battery-coating process.

### <Examples 6 and 7 and Comparative Example 4> Ratio of mixed graphite/SiOx active material

Examples 6 and 7 were the same as Example 5, with the exception that the weight of the mixed active material of graphite and SiOx (weight ratio of graphite to SiOx: 90:10) was varied. The weight ratio of the binder to the mixed active material to carbon nanotubes was 10:85:5 in Example 6, 10:80:10 in Example 7, and 1:98.5:0.5 in Comparative Example 4, and respective active-material slurries were prepared using the same.

The anode active-material slurry thus prepared was rolled on a copper foil, after which an anode layer was formed to a thickness of 35 *µ*m. Based on the results of a cycle test thereof, the capacity retention rate after 50 cycles was maintained at 95% or more in Example 6 and Example 7, whereas in Comparative Example 4, the anode layer formed on the electrode plate was very easily damaged because of excess active material, and thus, based on the results of the charge/discharge cycle life test thereof, the capacity retention rate after 50 cycles was about 75%, which is considered very poor.

### <Example 8> Conductive polymer binder using mixed template

Example 8 was the same as Example 5, with the exception that the conductive polymer binder synthesized using the mixed template of Example 3 was used.

Based on the results of the cycle life test on the coin cell manufactured in Example 8, it was confirmed that the capacity retention rate was maintained at 95% or more even after 50 charge/discharge cycles. Thereby, it can be found that the conductive polymer synthesized using the mixed template also exhibited a high capacity retention rate during the cycle test.

### <Example 9 and Comparative Example 5> Silicon nanoparticles

Example 9 was the same as Example 5, with the exception that silicon nanoparticles (theoretical capacity: 4,200 mAh/g) were used as the anode active material and thus an anode plate was manufactured from the silicon nanoparticles, PEDOT:CMC and carbon nanotubes at a weight ratio of 60:20:20. The thickness of the anode plate thus manufactured was 30 *µ*m after rolling. Comparative Example 5 was the same as Example 9, with the exception that CMC was used as the binder material.

Based on the results of the cycle life test of the coin cell manufactured in Example 9, the initial capacity was about 4000 mAh/g in Example 9 and Comparative Example 5, and the discharge capacity after 50 cycles was 3,275 mAh/g in Example 9 and 2,350 mAh/g in Comparative Example 5 using CMC. Thereby, it can be found that the cycle life characteristics of Example 9 using the cellulose-based conductive polymer of the present invention as the binder were significantly better than those of Comparative Example 5.

### <Examples 10 and 11 and Comparative Example 6> Ratio of binder and carbon nanotubes

Examples 10 and 11 were the same as Example 5, with the exception that the ratio of the binder and carbon nanotubes was varied. In the ratio of the binder and the carbon nanotubes, the weight ratio of the binder to SiOx to graphite to carbon nanotubes was 5:9:81:5 in Example 10 and 7:9:81:3 in Example 11. In Comparative Example 6, the weight ratio thereof was 9.6:9:81:0.4.

Based on the results of the charge/discharge cycle test of the coin cells thus manufactured, the capacity retention rate after 50 cycles was 95% or more in Examples 10 and 11, indicating that the initial capacity was hardly reduced. However, in Comparative Example 6, the capacity retention rate after 50 cycles was measured to be 81%.

Thereby, it can be found that when the amount of the carbon nanotubes was excessively low, the capacity retention rate was decreased.

### <Example 12 and Comparative Example 7> Length of carbon nanotubes

Example 12 and Comparative Example 7 were the same as Example 5, with the exception that carbon nanotubes having different lengths were used. The length of the carbon nanotubes was 40 *µ*m in Example 12 and 3 *µ*m in Comparative Example 7.

Based on the results of the charge/discharge cycle life test on the coin cells thus manufactured, the capacity retention rate after 50 cycles was maintained at 95% or more in Example 12, but was measured to be about 83% in Comparative Example 7.

### <Examples 13 and 14> Mixed conductive polymer binder

Examples 13 and 14 were the same as Example 5, with the exception that the PEDOT:CMC of Example 1 was mixed with each of PEDOT:PAA (available from CNPS) and PEDOT:PSS (available from Heraus, PT-2, solid content was adjusted to 2 wt% using a rotary evaporator), which are conductive polymers synthesized using different compound templates, and charge/discharge cycle life characteristics were measured using the resulting mixture as the binder. Briefly, PEDOT:CMC and PEDOT:PAA were mixed at a weight ratio of 50:50 in Example 13, and PEDOT:CMC and PEDOT:PSS were mixed at a weight ratio of 50:50 in Example 14, and then used as the binder.

Based on the results of the charge/discharge cycle life test on the CR2032 coin cells manufactured as described above, the capacity retention rate after 50 cycles was 95% or more in both of Examples 13 and 14. In an additional test, when PEDOT:PSS was used alone as the binder, the capacity retention rate after 50 cycles was measured to be less than 90%. However, as described above, when PEDOT:PSS was used in a mixture with PEDOT:CMC, the capacity retention rate was measured to be 95% or more. Thereby, it can be found that, when mixed with PEDOT:CMC and used as the mixed binder, the low capacity retention rate of PEDOT:PSS was compensated for, thereby exhibiting a high capacity retention rate.

### <Example 15 and Comparative Example 8> Cathode active material: NCM

Example 15 relates to a test for measuring the characteristics of a coin cell (CR2032) manufactured using a nickel-cobalt-manganese (NCM) cathode active material. The CR2032 coin cell using the NCM-based cathode active material of this example was manufactured according to the method of Example 5. Here, the cathode active material that was used was composed of NCM, PEDOT:CMC, carbon nanotubes, and carbon black at a weight ratio of 92:3.5:3.0:1.5. Comparative Example 8 was the same as Example 15, with the exception that PVDF (cathode binder, available from Solvay) was used. PVDF was used in the state of being dissolved in NMP (N-methyl-2-pyrrolidone).

Based on the results of the charge/discharge cycle test on the coin cells thus manufactured, the capacity retention rate after 50 cycles was measured to be 95.7% in Example 15 and 75% in Comparative Example 8.

As is apparent from the results of Examples 1-15 and Comparative Examples 1-8, the cellulose-based conductive polymer was well formed through a synthesis process using the cellulose-based compound of the present invention. In addition, it was confirmed that the conductive polymer was efficiently synthesized even when using the mixed template of the cellulose-based compound and the acrylic compound. In addition, it can be found that, even when using the mixed conductive polymer binder obtained by mixing conductive polymer binders synthesized using different compounds as the template, the charge/discharge cycle life characteristics were improved. It was confirmed that these conductive polymer binders were applicable not only to the anode active material but also to the cathode active material. Also, when using the PEDOT:CMC of the present invention as the binder, the active-material layer was efficiently adhered to the electrode plate, and in particular, when used along with carbon nanotubes, the density of the electrode layer was increased so that the mechanical stability of the electrode layer was maintained.

Examples of a conductive polymer binder synthesized using, as a template, a polymer compound having an exponential hydrogen ion concentration (pH) in the range of 2-6 in the aqueous solution state are described below.

### <Examples 16-19> Synthesis of PEDOT:PAA

Examples 16-19 relate to PEDOT:PAA synthesis, in which PEDOT:PAA is synthesized by adjusting the amount ratio of components used in the synthesis reaction, and the properties of the synthesized PEDOT:PAA are compared.

First, in Example 16, the process of synthesizing PEDOT:PAA using EDOT, PAA and an oxidizing agent at a molar ratio of 1:1:1 was performed. Also, in Examples 17-19, the synthesis process was performed in the same manner as in Example 16, with the exception that the amount ratio of the components was adjusted.

Specifically, 1.44 g of PAA (molecular weight: 1,250,000 g/mol, repeating unit molecular weight: 72 g/mol), 2.98 g of EDOT (molecular weight: 140 g/mol), and 4.56 g of APS (molecular weight: 228 g/mol) were added to 200 g of water in a three-neck flask and mixed with stirring for 5 min, followed by synthesis with stirring at room temperature for 24 hr.

The solution subjected to the above synthesis reaction was placed in a dialysis tubing bag (a cellulose tubular membrane), and the bag was then placed in a beaker containing ultrapure water, and dialyzed for 24 hr to remove unreacted monomer. Here, when the color of the water in which the dialysis tubing bag was placed was yellow, the unreacted monomer was regarded as removed.

Then, an anion-exchange resin (available from Lewatit, MP62) and a cation-exchange resin (available from Lewatit, S100) at a weight ratio of 1:1 were added in amounts of 10 parts by weight, based on the weight of the solution, to the dialyzed reaction solution, followed by ion-exchange treatment for 3 hr to remove residual ionic components.

Then, filtration was performed using a 400-mesh screen, thus obtaining a dark blue solution. Here, the dark blue solution is a PEDOT:PAA solution including PEDOT:PAA.

The properties of PEDOT:PAA synthesized in Examples 16-19, such as surface resistance and viscosity, are shown in Table 1 below. As shown in Table 1, the dark blue conductive polymer was successfully synthesized and the resistance decreased with an increase in the amount of EDOT.

The PEDOT:PAA thus synthesized is as represented by Chemical Formula 2 below.

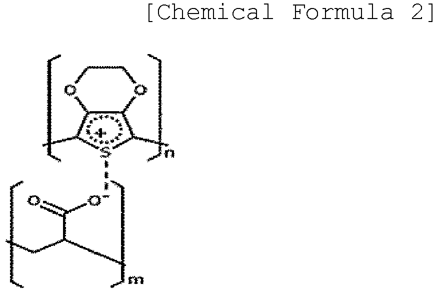

Here, n and m are natural numbers.

Table 1 below shows PEDOT:PAA synthesized in Examples 16-19 and the properties thereof.

**[Table 1]**

| Example | Composition ratio (molar ratio) (EDOT:PAA:oxidizing agent) | Surface resistance (kohm/sq.) | Viscosity (cP) | Solution color |
|---|---|---|---|---|
| 16 | 1:1:1 | 2 | 450 | Dark blue |
| 17 | 0.8:1:1 | 5 | 1630 | Dark blue |
| 18 | 0.6:1:1 | 10 | 3980 | Dark blue |
| 19 | 0.3:1:1 | 200 | 4746 | Dark blue |

### <Example 20 and Comparative Example 9> Adhesion of mixture of silicon nanoparticles, PEDOT:PAA and carbon nanotubes to electrode plate / conventional binder

In Example 20, the PEDOT:PAA solution prepared in Example 16, silicon nanoparticles (average diameter: 50 nm) and multiple-walled carbon nanotubes (MWCNTs) were mixed at a weight ratio based on solid content of 20:60:20. Specifically, 0.6 g of silicon nanoparticles, 0.2 g of carbon nanotubes and 10 g of the PEDOT:PAA solution having a solid content of 2% were placed in a C-mixer, kneaded three times for 10 min each at 2,000 rpm, treated once using a bar-type sonicator for 10 min, and finally stirred using a C-mixer for 10 min, thus preparing an electrode material composition. This composition was dried on a copper foil, after which an anode plate was manufactured to a thickness of 40 *µ*m.

An adhesion test was performed in a manner in which the surface of the anode plate thus manufactured was scratched with a knife and a piece of Scotch tape was attached to the anode plate and then peeled off therefrom, based on which it was confirmed that the electrode material layer was strongly adhered to the electrode plate without being separated therefrom.

### <Comparative Example 9>

Comparative Example 9 was the same as Example 20, with the exception that polyvinylidene fluoride (PVDF, available from Solvay) was used as the binder material.

Based on the results of testing adhesion of the electrode material layer on the anode plate thus manufactured using Scotch tape, it was confirmed that the electrode material layer was peeled off from the electrode plate.

In Example 20 and Comparative Example 9, it can be found that the electrode material layer of the anode plate was strongly adhered to the electrode plate when using PEDOT:PAA of the present invention as the binder, compared to when using the existing PVDF binder.

### <Example 21 and Comparative Examples 10-12>

In Example 21, an anode plate was manufactured in the same manner as in Example 20, and a coin cell having a half-cell structure (CR2016 type) was manufactured using the same, and in Comparative Examples 10-12, coin cells having the same structure were manufactured using different types of binder. The coin cells thus manufactured were placed in a charge/discharge tester and subjected to a charge/discharge cycle test. Here, a lithium metal foil was used as the counter electrode, and the electrolyte that was used was an electrolytic solution prepared by dissolving 1.15 mol of LiPF₆ in a mixed carbonate solvent of ethylene carbonate (EC), propylene carbonate (PC), diethyl carbonate (DEC), vinylene carbonate (VC) and fluoroethylene carbonate (FC) (weight ratio of EC:DEC:VC:FEC = 3:7:0.05:0.05). Manufacture of the coin cell was carried out in a glove box filled with argon gas.

The results of the charge/discharge cycle test of the coin cells manufactured as described above are summarized in Table 2 below. In the charge/discharge cycle test results depending on the type of binder in Example 21 and Comparative Examples 10-12, as shown in Table 2, the results of the retention capacity (mAh/g) after 100 cycles of the polyacrylic acid (PAA) binder, the carboxymethyl cellulose (CMC) binder, and the PEDOT:PSSA were compared, based on which it was confirmed that PEDOT:PAA exhibited 62.2%, PAA exhibited 36.5%, CMC exhibited 25.9%, and PEDOT:PSSA exhibited 37.0%, relative to the initial capacity.

As is apparent from the results of Example 21 and Comparative Examples 10-12, when using silicon nanoparticles as the anode active material, the retention capacity of PEDOT:PAA was very high compared to other binders. In particular, in the results for PAA, PEDOT:PSSA, and PEDOT:PAA, it can be found that the retention capacity was significantly increased when using, as the binder, PEDOT synthesized using PAA as the template, compared to when using PAA itself as the binder. Moreover, even in the PEDOT, the use of PAA as the template exhibited a significantly longer lifetime than the use of PSSA as the template.

Table 2 below shows the charge/discharge cycle test results depending on the type of binder in Example 21 and Comparative Examples 10-12. Here, the residual ratio (%) means the ratio of the remaining capacity relative to the initial capacity, that is, the capacity retention rate (%).

**[Table 2]**

| Classification | Type of binder | Acidity (pH) | 1^{st} cycle capacity (mAhg⁻¹) | Retention capacity after 100 cycles (mAhg⁻¹) | Residual ratio (%) |
|---|---|---|---|---|---|
| Example 21 | PEDOT:PAA | 2.5 | 3977.5 | 2473.9 | 62.2 |
| Comparative Example 10 | PAA | 2.5 | 3905.3 | 1427.2 | 36.5 |
| Comparative Example 11 | CMC | 3.5 | 3809.1 | 987.7 | 25.9 |
| Comparative Example 12 | PEDOT:PSSA | 1 | 3584.6 | 1325.3 | 37.0 |

### <Example 22 and Comparative Example 13>

As the anode active material in Example 22 and Comparative Example 13, graphite, which is the anode active material for a commercialized lithium-ion battery, was used. A coin cell having a half-cell structure of Example 22 and Comparative Example 13 was manufactured as follows. In Example 22, 2.91 g of graphite and 1.5 g of PEDOT:PAA having a solid content of 2% were placed in a C-mixer and kneaded two times for 10 min each at 2,000 rpm, thus preparing an anode active-material composition. Here, the weight ratio thereof based on solid content was 97:3 (graphite to PEDOT:PAA). The composition thus prepared was applied on a copper foil and dried, thus manufacturing an anode plate having a dry thickness of 40 *µ*m. Thereafter, a coin cell having a half-cell structure was manufactured according to the method of Example 21, placed in a charge/discharge cycle tester, and subjected to a charge/discharge cycle test.

Comparative Example 13 was the same as Example 21, with the exception that a mixed binder of styrene-butadiene rubber (SBR) and CMC (weight ratio: 1:1), used for the preparation of an anode active-material composition for a commercialized lithium-ion battery, was used as the binder.

Based on the results of the charge/discharge cycle test of the coin cells manufactured as described above, the retention capacity after 100 charge/discharge cycles was 79.2% relative to the initial capacity in the case of PEDOT:PAA of Example 22 and 64.0% in the case of mixed SBR/CMC binder.

As is apparent from the results of Example 22 and Comparative Example 13, the performance of the PEDOT:PAA binder was superior to that of the mixed SBR/CMC binder, which is a binder material for a commercially available lithium-ion battery.

### <Example 23 and Comparative Example 14> cathode active material: NCM battery

Example 23 relates to a test for measuring the characteristics of a coin cell manufactured using a nickel-cobalt-manganese (NCM) cathode active material, which is the cathode active material for a commercially available high-capacity lithium-ion battery.

A test cell for a charge/discharge cycle test using the NCM-based cathode active material of Example 23 was manufactured as follows. Specifically, a cathode active-material composition was prepared in a manner in which the NCM active material, PEDOT:PAA binder and MWCNTs were weighed at a weight ratio based on solid content of 96:2:2, placed in a C-mixer, and kneaded four times at 2,000 rpm for 5 min. The composition thus prepared was applied on an aluminum electrode plate and dried, thus manufacturing a cathode plate having a thickness of 40 *µ*m. Lithium metal was used as the anode plate.

Comparative Example 14 was the same as Example 23, with the exception that PVDF (available from Solvay), used for the preparation of the cathode active-material composition for a commercially available NCM-based lithium-ion battery, was used as the binder material.

In the test of the samples of Example 23 and Comparative Example 14, 100-cycle charge/discharge characteristics were measured at 45°C for each sample.

Based on the results of measurement thereof, the retention capacity after 100 charge/discharge cycles performed at 45°C of Example 23 was measured to be maintained at 89.4% relative to the initial capacity. On the other hand, when using the existing binder, PVDF, the retention capacity after 100 charge/discharge cycles was 67.4%.

As is apparent from the results of Example 23 and Comparative Example 14, the retention capacity of PEDOT:PAA of the present invention was excellent in the cathode active-material composition of this Example.

As is apparent from the results of Examples 16-23 and Comparative Examples 9-14, when the active-material composition using PEDOT:PAA synthesized in the present invention as the binder for a lithium-ion battery was applied and dried to manufacture the electrode plate, the active-material layer was strongly adhered to the electrode plate, and moreover, the retention capacity after 100 charge/discharge cycles was very high compared to other binder materials, and the cycle life characteristics of the lithium-ion battery manufactured therefrom were greatly improved. Moreover, it can be found that the PEDOT:PAA of the present invention was effective not only for the anode active material but also for the cathode active material.

The properties in the case in which carbon nanotubes are mixed are described below.

### <Examples 24-26 and Comparative Examples 15-18> Adhesion of mixture of silicon nanoparticles, PEDOT:PAA, and carbon nanotubes to electrode plate

In Examples 24-26, the adhesion, the density of the electrode layer, and the retention capacity after 100 charge/discharge cycles were evaluated depending on changes in the amount of carbon nanotubes.

In Example 24, the PEDOT:PAA solution prepared in Example 16, silicon nanoparticles (average diameter: 50 nm) and multiple-walled carbon nanotubes (MWCNTs) were mixed at a weight ratio based on solid content of 20:60:20. Specifically, 0.6 g of silicon nanoparticles, 0.2 g of carbon nanotubes, and 10 g of the PEDOT:PAA solution having a solid content of 2 wt% were placed in a C-mixer, kneaded three times for 10 min each at 2,000 rpm, treated once using a bar-type sonicator for 10 min, and finally stirred using a C-mixer for 10 min, thus preparing an electrode material composition, after which the composition slurry thus obtained was dried on a copper foil having a thickness of 8 µm such that the thickness of the resulting electrode layer was 6 pm, thereby manufacturing an anode plate having a total thickness of 14 µm.

Example 25 and Example 26 were the same as Example 24, with the exception that respective slurries were prepared in a manner in which the amount ratio of the conductive polymer binder to the active material to the carbon nanotubes was set to 25:65:10 in Example 25 and 15:55:30 in Example 26, and thus the amount of the carbon nanotubes based on the weight of the binder was changed.

An adhesion test was performed in a manner in which the surface of the anode plate manufactured in Examples 24-26 was scratched with a knife and a piece of Scotch tape was attached to the anode plate and then peeled off therefrom, based on which it was confirmed that the electrode layer was strongly adhered to the electrode plate without being separated therefrom. Moreover, the density of the electrode layer was good to the extent that the electrode layer was not significantly damaged even when scraped using tweezers. This phenomenon was observed to appear in all of Examples 24-26.

Comparative Example 15 was the same as Example 24, with the exception that a mixed binder, obtained by mixing styrene-butadiene rubber (SBR) and carboxymethyl cellulose (CMC) at 1:1, was used as the binder material, in lieu of the PEDOT:PAA binder. Comparative Example 16 was the same as Comparative Example 15, with the exception that conductive carbon black (Super P) was used as the conductivity-imparting agent, in lieu of carbon nanotubes.

In the case of forming the anode layer using the slurry prepared in Comparative Example 15, about 50% of the anode layer was separated in the Scotch tape test, and thus the adhesion of the electrode layer formed on the copper electrode plate was very low compared to Example 24, and when the electrode layer was scratched with a pointed portion of tweezers, the electrode layer was easily separated. Also, in Comparative Example 16, almost the entire electrode layer was separated in the Scotch tape test, and when the surface thereof was scratched with a pointed portion of the tweezers, the electrode layer was easily broken and separated.

As is apparent from the results of Example 24 and Comparative Examples 15 and 16, when the electrode layer was formed using the active-material composition prepared using only the conductive polymer binder of the present invention and the carbon nanotubes, adhesion to the electrode plate and the density of the electrode layer were vastly superior. On the other hand, when the existing anode binder, such as the mixed SBR/CMC binder, or conductive carbon black was used, adhesion to the electrode plate and the density of the electrode layer itself were poor. In particular, when conductive carbon black was used as the conductivity-imparting agent, the adhesion between the electrode layer and the electrode plate was very poor and the density of the electrode layer itself was also very low.

The results of the charge/discharge cell test of Examples 24-26 and Comparative Examples 15 and 16 are summarized in Table 3 below. The charge/discharge cycle test was evaluated using a coin cell (CR2032 type) having a half-cell structure. Here, a lithium metal foil was used as the counter electrode, and the electrolyte that was used was an organic electrolytic solution prepared by mixing 1.15 mol of LiPF₆ with ethylene carbonate (EC) and diethyl carbonate (DEC) at a weight ratio of 3:7 and further adding 10 wt% of a mixed solvent of vinylene carbonate (VC) and fluoroethylene carbonate (FEC) at 1:1 thereto. Manufacture of the coin cell was carried out in a glove box filled with argon gas. The cycle test of all cells of the present invention was performed at a rate of 0.5C.

The results of the charge/discharge cycle test of the coin cells manufactured as described above are summarized in Table 3 below. Based on the charge/discharge cycle test results of Examples 24-26 and Comparative Examples 15 and 16 in Table 3, it can be found for the half cell manufactured using the composition slurry of the present invention that the retention capacity after 100 cycles was much higher than the results of Comparative Examples. Based on the results of Comparative Examples 15 and 16, when using the existing electrically insulative binder, both carbon nanotubes and conductive carbon black exhibited very low retention capacity compared to the conductive polymer binder. In Comparative Examples 15 and 16, when using the mixed CMC/SBR binder as the existing graphite binder, the retention capacity was low compared to when using the conductive polymer binder of the present invention, but the use of carbon nanotubes showed slightly higher retention capacity than the use of conductive carbon black. In particular, based on the results of comparing the extent of reduction in the initial capacity of the cycle test, it can be found that, in the battery half cell manufactured according to the present invention, the extent of reduction in capacity during the initial tens of cycles was significantly low compared to the samples of Comparative Examples.

In Comparative Examples 17 and 18, the effect of the composition ratio of components when preparing the active-material slurry of the present invention was compared. In Comparative Examples 17 and 18, the active-material slurry was prepared using components at a ratio similar to the ratio of components of the slurry composition generally applied when graphite was used as the anode active material.

As shown in Table 3 below, in Comparative Examples 17 and 18, it was confirmed that the retention capacity was rapidly decreased to almost 0 mAh/g within a few tens of cycles after the start of the cycle test, indicating that battery performance was completely lost.

Based on the above results, it can be found that the use of carbon nanotubes in the conductive polymer binder as well as in the existing binder enhanced the adhesion of the electrode layer to the electrode plate and also exhibited good retention capacity after the charge/discharge cycle compared to when using the conductive carbon black. In addition, it can be found that the ratio of components of the slurry composition of the present invention exhibited vastly superior performance compared to the ratio of components used for the existing graphite.

Table 3 below shows the retention capacity and residual ratio in the cycle test.

**[Table 3]**

| Classification | Slurry composition (binder:active material (Si):carbon nanotubes:carbon black) | Capacity after 3 cycles (mAh/g) | Capacity after 100 cycles (mAh/g) | Residual ratio (%) |
|---|---|---|---|---|
| Example 24 | 20:60:20:0 | 3370 | 2497 | 74.1 |
| Example 25 | 25:60:15:0 | 3293 | 2384 | 72.4 |
| Example 26 | 15:55:30:0 | 3325 | 2513 | 75.6 |
| Comparative Example 15 | 10:10:60:20:0 | 3245 | 2216 | 68.3 |
| Comparative Example 16 | 10:10:60:0:20 | 3174 | 1758 | 55.4 |
| Comparative Example 17 | 3:95:1:1 | 2908 | 54 | 1.86 |
| Comparative Example 18 | 1.5:1.5:95:1:1 | 3021 | 78 | 2.58 |

| | | | | |
|---|---|---|---|---|
| Comparative Examples 15 and 16: Weight ratio of CMC to SBR to Si to carbon nanotubes to conductive carbon black Comparative Example 17: Weight ratio of binder of Example 24 to Si to carbon nanotubes to conductive carbon black Comparative Example 18: Weight ratio of CMC to SBR to Si to carbon nanotubes to conductive carbon black | | | | |

### <Example 27 and Comparative Example 19> SiOx

Example 27 was the same as Example 24, with the exception that a slurry composition was prepared using SiOx as the anode active material, in lieu of Si metal particles. Comparative Example 19 was the same as Example 27, with the exception that, as shown in the composition ratio of the active-material slurry in Table 4 below, the amounts of the binder material and conductivity-imparting agent were changed. In this Example and in Comparative Example, SiOx having a theoretical capacity of 1,400 mAh/g was used.

As summarized in Table 4 below, in the case of SiOx, when the conductive polymer binder of the present invention and the carbon nanotubes were used, the retention capacity after 3 cycles was 1,150 mAh/g, the retention capacity after 100 cycles was 960 mAh/g, and the residual ratio was about 83%. In the case of using the mixed CMC/SBR binder, the retention capacity after 100 cycles was measured to be about 54%. Meanwhile, in the case of manufacturing a half cell by preparing a slurry at the composition ratio (SBR:CMC:SiOx:carbon black = 2:2:95:1) applied when using existing graphite, it was observed that the retention capacity was rapidly decreased to almost 0 mAh/g within a few tens of cycles after the start of the cycle test, indicating that the battery performance was lost.

Based on the above results, it can be found that the retention capacity after 100 cycles was superior when using the binder of the present invention compared to when using the existing mixed CMC/SBR binder and/or conductive carbon black.

In particular, it was confirmed that the battery performance when applying the composition ratio of the present invention was vastly superior compared to the composition ratio generally applied when using existing graphite. These results were the same as when using Si metal particles as the active material.

Table 4 below shows the retention capacity and residual ratio in the cycle test.

**[Table 4]**

| Classification | Slurry composition (binder:active material (SiOx):carbon nanotubes:carbon black) | Capacity after 3 cycles (mAh/g) | Capacity after 100 cycles (mAh/g) | Residual ratio (%) |
|---|---|---|---|---|
| Example 27 | 20:60:20:0 | 1150 | 960 | 83.4 |
| Comparative Example 19 | 10:10:60:20 | 1170 | 638 | 54.5 |

| | | | | |
|---|---|---|---|---|
| Example 27: Weight ratio of binder to SiOx to carbon nanotubes Comparative Example 19: Weight ratio of CMC to SBR to SiOx to conductive carbon black | | | | |

### <Examples 28-30> Test of mixed Si/graphite active material

Examples 28-30 were the same as Example 24, with the exception that the amount ratio of the binder and carbon nanotubes was set to 20:20 (weight ratio of binder to carbon nanotubes) and the amount of the active material was changed under the condition that the mixing ratio of silicon nanoparticles and graphite was fixed at 20:80. Here, the thickness of the electrode layer was adjusted to 30 *µ*m.

Based on the charge/discharge cycle test results of the coin cells manufactured as described above, it was confirmed that the retention capacity after 100 charge/discharge cycles was 80% or more in all of Examples 28-30.

In these examples, the retention capacity was not compared after the cycle test of the half cell using the active-material composition including the mixed CMC/SBR binder and conductive carbon black. However, as mentioned in the above Examples and Comparative Examples, it will be obvious that the use of the existing binder shows inferior cycle characteristics compared to the use of the conductive polymer binder of the present invention and carbon nanotubes.

Thereby, even in the case of silicon, SiOx or an active material thereof mixed with graphite, the use of the conductive polymer binder of the present invention and the carbon nanotubes exhibited vastly superior battery performance compared to the case in which the same were not used.

Table 5 below shows the retention capacity and residual ratio in the cycle test.

**[Table 5]**

| Classification | Slurry composition (binder:Si:graphite:carbon nanotubes) | Capacity after 3 cycles (mAh/g) | Retention capacity after 100 cycles (mAh/g) | Residual ratio (%) |
|---|---|---|---|---|
| Example 28 | 20:12:48:20 | 957 | 790 | 82.5 |
| Example 29 | 20:14:56:20 | 946 | 792 | 83.7 |
| Example 30 | 20:18:72:20 | 952 | 776 | 81.5 |

### Theoretical capacity of graphite:Si (80:20): 1,137 mAh/g

### <Examples 31 and 32> Control of electrode layer thickness (weight ratio of graphite:SiOx = 80:20)

Examples 31 and 32 were the same as Example 24, with the exception that a composition (weight ratio of binder:graphite:SiOx:carbon nanotubes = 5:72:18:5) was prepared using a mixed active material of graphite and SiOx, and the anode layer was formed at different thicknesses using the same. The thickness of the electrode layer was 25 µm in Example 31 and 40 µm in Example 32.

Based on the cell test results thereof, in both of Examples 31 and 32, the retention capacity after 100 cycles was maintained at 93% or more relative to the initial capacity, indicating that the battery performance was very good.

### <Examples 33 and 34 and Comparative Example 20> Control of CNT length (weight ratio of graphite:SiOx = 80:20)

Examples 33 and 34 and Comparative Example 20 were the same as Example 32, with the exception that each composition was prepared using multiple-walled carbon nanotubes having different lengths and was then applied on an electrode plate to form an electrode layer. The length of the multiple-walled carbon nanotubes was 30 µm in Example 33 and 60 µm in Example 34. Also, multiple-walled carbon nanotubes having a length as short as 2 µm were used in Comparative Example 20. When the anode layer was formed using each of these compositions and the surface thereof was scratched with a pointed portion of tweezers, the density of the electrode layer of Examples 33 and 34 was determined to be high, but in Comparative Example 20, the electrode layer was observed to be easily scratched. Thereby, in order to increase the density of the electrode layer, the use of carbon nanotubes having a predetermined length or more was found to be effective.

Based on the charge/discharge cycle test results thereof, it was confirmed that the retention capacity after 100 cycles was 93% or more in Examples 33 and 34, and thus very good performance was maintained, whereas the retention capacity was about 80% in Comparative Example 20, and thus poor performance compared to Examples 33 and 34 resulted.

### <Examples 35-37 and Comparative Examples 21 and 22> Ratio of binder and carbon nanotubes (weight ratio of graphite:SiOx = 80:20)

Examples 35-37 and Comparative Examples 21 and 22 were the same as Example 34, with the exception that the amount ratio of the conductive polymer binder and the carbon nanotubes was changed.

Based on the results of confirmation of the density of the anode layer, in Examples 35-37, adhesion between the electrode plate and the electrode layer was good, and the density, evaluated by scratching with a pointed tip, was also good. However, in Comparative Examples, the density of the anode layer was good but adhesion to the electrode plate was poor (Comparative Example 21), or the adhesion to the electrode plate was good but the density of the anode layer was poor (Comparative Example 22), indicating poor characteristics compared to Examples 35-37.

Also, based on the 100-cycle charge/discharge test results (Table 6 below), the retention capacity after 100 cycles was maintained at 90% or more in all of the Examples, but the retention capacity after 100 cycles was measured to be about 83% and 75% in Comparative Example 21 and Comparative Example 22, respectively, indicating very low cycle life characteristics compared to Examples 35-37. In particular, Comparative Example 22, in which the amount of the conductive polymer binder was much higher than the amount of the carbon nanotubes, was problematic in that the retention capacity after 100 cycles was decreased to 80% or less and charging and discharging took too long.

Table 6 below shows the retention capacity and residual ratio in the cycle test.

**[Table 6]**

| Classification | Slurry composition (binder:Si:graphite:carbon nanotubes) | Capacity after 3 cycles (mAh/g) | Retention capacity after 100 cycles (mAh/g) | Residual ratio (%) |
|---|---|---|---|---|
| Example 35 | 5:18:72:5 | 547 | 513 | 93.8 |
| Example 36 | 7:18:72:3 | 538 | 507 | 94.2 |
| Example 37 | 3:18:72:7 | 542 | 503 | 92.8 |
| Comparative Example 21 | 1:18:72:9 | 535 | 447 | 83.5 |
| Comparative Example 22 | 9.6:18:72:0.4 | 528 | 398 | 75.4 |

### Theoretical capacity of graphite:SiOx (80:20): 577.6 mAh/g

As is apparent from the results of Examples and Comparative Examples, when a lithium-ion battery was manufactured using an active-material composition slurry prepared by mixing the mixture of the conductive polymer of the present invention and carbon nanotubes with the active material, the electrode layer had excellent adhesion to the electrode plate, and the density of the electrode layer itself was good. Moreover, when a battery cell was manufactured using the active-material composition prepared by mixing the conductive polymer binder of the present invention and carbon nanotubes, the retention capacity after the charge/discharge cycle test was very high compared to other binders such as an electrically insulative binder or carbon black. Therefore, it can be concluded that the cycle life characteristics of the lithium-ion battery manufactured according to the present invention are greatly improved.

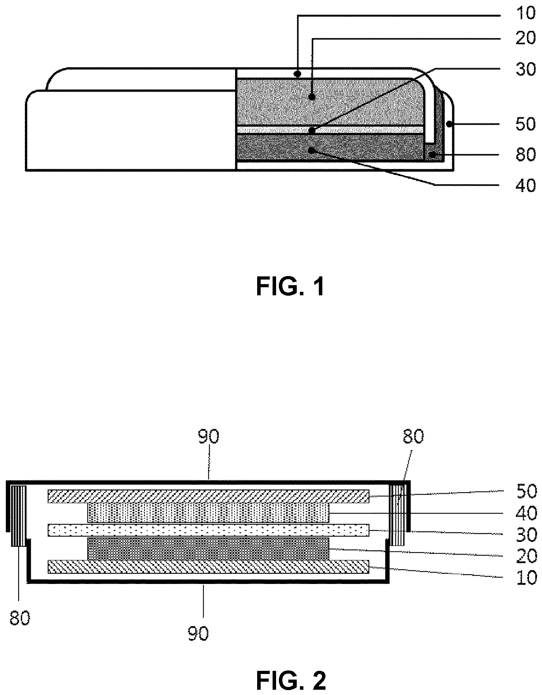

An example of a lithium-ion battery including the active-material composition of the present invention prepared as above is described with reference to the drawings. As shown in FIGS. 1 and 2, the lithium-ion battery includes a cathode current collector 10, a cathode material layer 20, a separator 30, an anode material layer 40, an anode current collector 50, and a gasket 80 and a case 90 for sealing.

The active-material composition of the present invention may be used for the cathode material layer 20 and the anode material layer 40, and may also be variously applied to a general lithium-ion battery using an active material, as well as the structure of the lithium-ion battery shown.

### Industrial Applicability

The lithium-ion battery of the present invention can be used in a variety of devices using batteries, such as electric vehicles, mobile phones, laptop computers and the like.

## Claims

1. A lithium-ion battery,
wherein an active-material composition of either or both of an anode and a cathode for the lithium-ion battery comprises at least one selected from among:
a cellulose-based conductive polymer binder synthesized using a cellulose-based compound as a template,
a mixed conductive polymer binder obtained by mixing the cellulose-based conductive polymer binder with at least one conductive polymer synthesized using a different type of compound as a template, and
a cellulose-based conductive polymer binder synthesized using, as a template, a polymer compound having an exponential hydrogen ion concentration (pH) of 2-6 in an aqueous solution state.

2. The lithium-ion battery of claim 1, wherein the cellulose-based compound is configured such that a portion of an -R component of an -OR group of a cellulose molecule is substituted with a component that enables dissolution in water, in which a degree of substitution is 0.5 or more; and
the cellulose-based compound is configured such that an -R component of an -OR group of a cellulose molecule is alkylcarboxylic acid or a salt compound thereof or a hydroxyl group.

3. The lithium-ion battery of claim 2, wherein a length of an alkyl group of the alkylcarboxylic acid or the salt compound thereof is 1-4 carbon atoms; and
the cellulose-based compound is carboxymethyl cellulose (CMC) having a degree of substitution of 0.5 or more.

4. The lithium-ion battery of any one of claims 1 to 3, wherein the cellulose-based compound has a weight average molecular weight of 50,000-4,000,000 g/mol,
a conductive polymer synthesized using the cellulose-based compound as a template comprises at least one selected from among aniline, pyrrole, thiophene and modified conductive polymers thereof, and
a surface resistance of the conductive polymer is 10⁸ ohm/sq or less.

5. The lithium-ion battery of claim 4, wherein the cellulose-based conductive polymer is poly(3,4-ethylenedioxythiophene):carboxymethyl cellulose (PEDOT:CMC), and is synthesized using carboxymethyl cellulose (CMC) as a template and EDOT as a monomer, in which a molar amount of CMC is 0.2-5 relative to 1 mol of EDOT, and
a PEDOT:CMC solid content in a PEDOT:CMC aqueous suspension is 1-10%.

6. The lithium-ion battery of any one of claims 1 to 5, wherein the template of the cellulose-based conductive polymer binder is a mixed template obtained by mixing the cellulose-based compound with an acrylic compound.

7. The lithium-ion battery of claim 6, wherein the cellulose-based compound is carboxymethyl cellulose,
the different type of compound is polyacrylic acid as an acrylic polymer,
a solid content of a conductive polymer synthesized using the mixed template in a binder aqueous suspension is 1-10%, and
a weight ratio of carboxymethyl cellulose to polyacrylic acid is in a range from 95:5 to 5:95.

8. The lithium-ion battery of any one of claims 1 to 7, wherein the different type of compound is a polymer compound having an exponential hydrogen ion concentration (pH) of 2-6 in an aqueous solution state or polystyrene sulfonic acid (PSSA), and
a solid content of a total conductive polymer binder in a binder aqueous suspension is 1-10%.

9. The lithium-ion battery of claim 8, wherein the different type of compound comprises at least one selected from among polyacrylic acid (PAA) and polystyrene sulfonic acid (PSSA), and
the conductive polymer synthesized using the cellulose-based compound as the template and the conductive polymer synthesized using the different type of compound as the template are mixed such that an amount of one component thereof is 5% by weight or more.

10. The lithium-ion battery of any one of claims 1 to 9, wherein the active-material composition further comprises carbon nanotubes in order to increase a density and a conductivity of an electrode layer.

11. The lithium-ion battery of claim 10, wherein an amount of the carbon nanotubes in the active-material composition is 5-300 parts by weight based on 100 parts by weight of a solid content of the conductive polymer binder.

12. The lithium-ion battery of claim 10 or 11, wherein the carbon nanotubes comprise at least one selected from among single-walled carbon nanotubes, double-walled carbon nanotubes and multiple-walled carbon nanotubes, and
a length of the carbon nanotubes is 5-100 µm.

13. The lithium-ion battery of any one of claims 1 to 12, wherein the active-material composition is an anode active-material composition comprising an anode active material containing a silicon component as an active ingredient or an anode active material in which graphite is contained in the silicon component.

14. The lithium-ion battery of claim 13, wherein the silicon component of the anode active material is silicon or silicon oxide, and
when the anode active material is the anode active material containing the silicon component as the active ingredient, an amount of the anode active material is 10-85 wt% based on a total weight of a solid content of the anode active-material composition, or
when the anode active material is the anode active material in which graphite is contained in the silicon or silicon oxide, an amount of the anode active material is 40-98 wt% based on a total weight of a solid content of the anode active-material composition.

15. The lithium-ion battery of claim 14, wherein an amount of the silicon or silicon oxide that is mixed with graphite is 1-90 wt% based on a total weight of the anode active material.

16. The lithium-ion battery of any one of claims 13 to 15, wherein the total solid content of the anode active-material slurry in an anode active-material slurry composition including the anode active-material composition is 5-60 wt%, and
the anode has a thickness of 2-50 µm.

17. The lithium-ion battery of any one of claims 13 to 16, wherein, when the anode active material is the anode active material containing the silicon component alone as the active ingredient, a thickness of the anode layer is 5-40 µm, or
when the anode active material is the anode active material in which graphite is contained in the silicon or silicon oxide, a thickness of the anode layer is 5-50 µm.

18. The lithium-ion battery of any one of claims 13 to 17, wherein a thickener is further added to adjust a viscosity of an anode active-material slurry, and
the thickener for adjusting the viscosity of the anode active-material slurry is a cellulose-based thickener comprising hydroxypropyl cellulose, ethyl cellulose or carboxymethyl cellulose, or an acrylic polymer compound having a weight average molecular weight of 1,000,000 g/mol or more.

19. The lithium-ion battery of any one of claims 1 to 12, wherein the active-material composition is a cathode active-material composition, and
a cathode active material comprises at least one selected from among lithium, manganese, nickel, cobalt and aluminum.

20. A binder for use in an active-material composition of an anode or a cathode for a lithium-ion battery,
wherein the binder comprises at least one selected from among:
a cellulose-based conductive polymer binder synthesized using a cellulose-based compound as a template,
a mixed conductive polymer binder obtained by mixing the cellulose-based conductive polymer binder with at least one conductive polymer synthesized using a different type of compound as a template, and
a cellulose-based conductive polymer binder synthesized using, as a template, a polymer compound having an exponential hydrogen ion concentration (pH) of 2-6 in an aqueous solution state.

21. The binder of claim 20, wherein the template of the cellulose-based conductive polymer binder is a mixed template obtained by mixing the cellulose-based compound with an acrylic compound.

22. The binder of claim 20 or 21, wherein the binder comprises at least one selected from among polyacrylic acid (PAA) and polystyrene sulfonic acid (PSSA), and
conductive polymers synthesized using the different type of compound as the template are mixed such that an amount of one component thereof is 5% by weight or more.
